# EUROPEAN PATENT APPLICATION

(11) **EP 1 930 839 A2**
(43) Date of publication of application: **11.06.2008**
(21) Application number: 07121916.6
(22) Date of filing: 29.11.2007
(51) Int. Cl.: G06K 7/00

(54) **Reader/writer apparatus, data access system, data access control method, and computer product**

(30) Priority: 06.12.2006 JP 2006329958
(71) Applicant: Fujitsu Ltd., Kawasaki-shi, Kanagawa 211-8588 (JP)
(72) Inventor: Sugano, Hiroyasu Fujitsu Limited, Kawasaki-shi, Kanagawa 211-8588 (JP); Matsuda, Masahiro Fujitsu Limited, Kawasaki-shi Kanagawa 211-8588 (JP); Tanaka, Yoshinori Fujitsu Limited, Kawasaki-shi Kanagawa 211-8588 (JP); Maniwa, Toru Fujitsu Limited, Kawasaki-shi Kanagawa 211-8588 (JP); Ninomiya, Teruhisa Fujitsu Limited, Kawasaki-shi Kanagawa 211-8588 (JP)
(74) Representative: Wilding, Frances Ward

(57) **Abstract**

A reader/writer apparatus includes a tag search instruction receiving unit that receives a tag search instruction from a host apparatus. The tag search instruction includes a data read instruction and/or a data write instruction on the RFID tag. The reader/writer apparatus also includes a tag identification information requesting unit that transmits to the RFID tag a request for transmission of tag identification information uniquely identifying the RFID tag when the tag search instruction receiving unit receives the tag search instruction; and a data processing requesting unit that transmits a data read request and/or a data write request to the RFID tag identified by the tag identification information based on the read instruction and/or the write instruction when receiving the tag identification information transmitted from the RFID tag in response to the request for transmission transmitted from the tag identification information requesting unit.

## Description

### BACKGROUND OF THE INVENTION

### 1. Field of the Invention

The present invention relates to a reader/writer apparatus, a reader/writer control program, a data access system, and a data access control method that carry out data reading and/or writing on an RFID (Radio Frequency Identification) tag in response to an instruction from a host apparatus, and, more particularly, to a reader/writer apparatus, a reader/writer control program, a data access system, and a data access control method that reduce overhead occurring in communication between a host apparatus and the reader/writer apparatus when data reading and/or writing on an RFID tag is carried out.

### 2. Description of the Related Art

Practical use of an RFID tag has been progressing in recent years, which puts the RFID in various uses, such as product management in the field of physical distribution and personal authentication in a variety of service fields. The RFID tag is capable of having stored thereon various data, and is identified uniquely by a tag ID assigned to each tag. Such an RFID tag may also be called an RF tag, IC (Integrated Circuit) tag, or radio tag.

Data reading/writing on the RFID tag is carried out using a dedicated reader/writer, which is an apparatus that reads data stored on the RFID tag or writes data on the FRID tag through radio communication with the RFID tag. Communication specification with respect to radio communication between the reader/writer and the RFID tag is standardized at ISO (International Organization for Standardization) and IEC (International Electrotechnical Commission) (e.g., see ISO/IEC 18000-6 (type A, B, and C)).

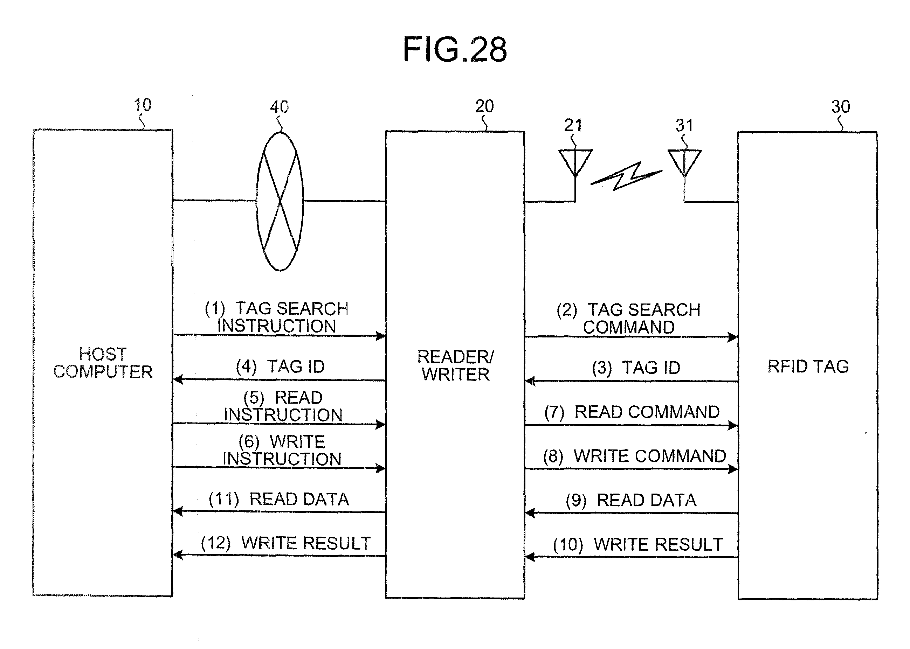

A data access control method for an RFID tag is briefly described here. Fig. 28 is an explanatory view of a conventional data access control method.

Fig. 28 depicts an ordinary RFID system that includes a host computer 10 controlling a reader/writer 20, the reader/writer 20, and an RFID tag 30. In this RFID system, the host computer 10 and the reader/writer 20 communicate with each other via a network 400, and the reader/writer 20 and the RFID tag 30 communicate with each other by mutually transmitting/receiving radio waves through an antenna 21 of the reader/writer 20 and an antenna 31 of the RFID tag 30. Though only one RFID tag 30 is shown in Fig. 28, this RFID system actually includes a plurality of RFID tags 30.

First, before data reading and writing on the RFID tag, the host computer 10 transmits a tag search instruction instructing detection of the RFID tag to the reader/writer 20 ((1) shown in Fig. 28). Receiving the tag search instruction, the reader/writer 20 transmits a tag search command requesting transmission of a tag ID to RFID tags 30 present within a contact range of the antenna 21 ((2) shown in Fig. 28). The RFID tag 30 receiving this tag search command then transmits the tag ID of the RFID tag 30 to the reader/writer 20 as a response to the tag search command ((3) shown in Fig. 28).

Upon receiving tag IDs from all RFID tags 30 present within the contact range of the antenna 21, the reader/writer 20 transmits the received tag IDs all together to the host computer 10 ((4) shown in Fig. 28). Receiving a search result from the reader/writer 20, the host computer 10 then transmits a read instruction or a write instruction for each RFID tag on the basis of a tag ID included in the search result ((5) or (6) shown in Fig. 28).

When receiving a read instruction, the reader/writer 20 transmits a read command requesting data reading to the RFID tag 30 that is specified by the read instruction ((7) shown in Fig. 28). When receiving a write instruction, the reader/writer 20 transmits a write command requesting data writing to the RFID tag 30 that is specified by the write instruction ((8) shown in Fig. 28).

The RFID tag 30 receiving the read command reads out data from a storage device (memory, etc.) incorporated in the RFID tag 30 on the basis of the received read command, and transmits the read out data (read data) to the reader/writer 20 ((9) shown in Fig. 28). The RFID tag 30 receiving a write command writes data on the storage device (memory, etc.) incorporated in the RFID tag 30 on the basis of the received write command, and transmits a write result, which indicates whether data writing has been completed normally, to the reader/writer 20 ((10) shown in Fig. 28).

When receiving the read data, the reader/writer 20 transmits the read data to the host computer 10 ((11) shown in Fig. 28). When receiving the write result, the reader/writer 20 transmits the write result to the host computer 10 ((12) shown in Fig. 28).

In the conventional data access control method, as described above, all RFID tags 30 present within the contact range of the reader/writer are detected first, and then the host computer transmits a read instruction or a write instruction one by one for each detected RFID tag to carry out data reading or writing on the RFID tag.

When data reading or writing is carried out simultaneously on all RFID tags present within the contact range of the reader/writer, however, transmitting a read instruction or a write instruction one by one for each RFID is very inefficient.

Besides, transmission of read instructions or write instructions results in exchange of a great amount of data between the host computer and the reader/writer, which leads to an increase in overhead in data communication between the host computer and the reader/writer. This problem becomes striking especially in an RFID system including a number of RFID tags.

Thus, how to reduce overhead in communication between a host apparatus and a reader/writer apparatus upon carrying out data reading and/or writing on RFID tags is extremely important issue.

### SUMMARY OF THE INVENTION

It is desirable to at least partially solve the problems in the conventional technology.

According to an embodiment of one aspect of the present invention, a reader/writer apparatus for reading/writing data from/to an RFID tag according to an instruction from a host apparatus, includes a tag search instruction receiving unit that receives a tag search instruction from the host apparatus, the tag search instruction including at least one of a data read instruction and a data write instruction on the RFID tag; a tag identification information requesting unit that transmits to the RFID tag a request for transmission of tag identification information uniquely identifying the RFID tag when the tag search instruction receiving unit receives the tag search instruction; and a data processing requesting unit that transmits at least one of a data read request and a data write request to the RFID tag identified by the tag identification information based on the at least one of the read instruction and the write instruction when receiving the tag identification information transmitted from the RFID tag in response to the request for transmission transmitted from the tag identification information requesting unit.

According to an embodiment of another aspect of the present invention, a computer-readable recording medium, which stores therein a computer program for controlling a reader/writer apparatus for reading/writing data from/to an RFID tag according to an instruction from a host apparatus, causes a computer to execute receiving a tag search instruction from the host apparatus, the tag search instruction including at least one of a data read instruction and a data write instruction on the RFID tag; transmitting to the RFID tag a request for transmission of tag identification information uniquely identifying the RFID tag when the tag search instruction is received; and transmitting at least one of a data read request and a data write request to the RFID tag identified by the tag identification information based on the at least one of the read instruction and the write instruction upon reception of the tag identification information transmitted from the RFID tag in response to the request for transmission.

According to an embodiment of still another aspect of the present invention, a data access system includes a reader/writer apparatus that reads/writes data from/to an RFID tag storing therein given data; and a host apparatus that transmits at least one of a data read instruction and a data write instruction on the RFID tag to the reader/writer apparatus. The host apparatus includes a tag search instruction generating unit that generates a tag search instruction including the at least one of the read instruction and the write instruction; and a tag search instruction transmitting unit that transmits the tag search instruction generated by the tag search instruction generating unit to the reader/writer apparatus. The reader/writer apparatus includes a tag search instruction receiving unit that receives the tag search instruction from the host apparatus; a tag identification information requesting unit that transmits to the RFID tag a request for transmission of tag identification information uniquely identifying the RFID tag when the tag search instruction receiving unit receives the tag search instruction; and a data processing requesting unit that transmits at least one of a data read request and a data write request to the RFID tag identified by the tag identification information based on the at least one of the read instruction and the write instruction when receiving the tag identification information transmitted from the RFID tag in response to the request for transmission transmitted from the tag identification information requesting unit.

According to an embodiment of still another aspect of the present invention, a data access control method for controlling a reader/writer apparatus for reading/writing data from/to an RFID tag according to an instruction from a host apparatus, includes generating in the host apparatus a tag search instruction including at least one of a read instruction and a write instruction; transmitting from the host apparatus the generated tag search instruction to the reader/writer apparatus; transmitting from the reader/writer apparatus to the RFID tag a request for transmission of tag identification information uniquely identifying the RFID tag when the reader/writer apparatus receives the tag search instruction from the host apparatus; and transmitting at least one of a data read request and a data write request from the reader/writer apparatus to the RFID tag identified by the tag identification information based on the at least one of the read instruction and the write instruction when the reader/writer apparatus receives the tag identification information transmitted from the RFID tag in response to the transmitted request for transmission.

The above and other features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is an explanatory view of the concept of a data access control method of a first embodiment;
Fig. 2 is a functional block diagram of the configuration of an RFID system of the first embodiment;
Fig. 3 depicts an example of a tag search instruction including a read instruction of the first embodiment;
Fig. 4 depicts an example of a tag search instruction including a write instruction of the first embodiment;
Fig. 5 depicts an example of a read command of the first embodiment;
Fig. 6 depicts an example of a write command of the first embodiment;
Fig. 7 is a flowchart of a procedure of a host computer or the first embodiment;
Fig. 8 is a flowchart (1) of a procedure of a data read process by a reader/writer of the first embodiment;
Figs. 9A and 9B are flowcharts (2) of a procedure of the data read process by the reader/writer of the first embodiment;
Fig. 10 is a flowchart (1) of a procedure of a data write process by the reader/writer of the first embodiment;
Figs. 11A and 11B are flowcharts (2) of a procedure of the data write process by the reader/writer of the first embodiment;
Fig. 12 is a flowchart of a procedure of an RFID tag of the first embodiment;
Fig. 13 is an explanatory view of the concept of a data access control method of a second embodiment;
Fig. 14 is a functional block diagram of the configuration of an RFID system of the second embodiment;
Fig. 15 depicts an example of a tag search instruction including a read instruction of the second embodiment;
Fig. 16 depicts an example of a tag search instruction including a write instruction of the second embodiment;
Fig. 17 depicts an example of a read command of the second embodiment;
Fig. 18 depicts an example of a write command of the second embodiment;
Fig. 19 is a flowchart of a procedure of a host computer of the second embodiment;
Fig. 20 is a flowchart (1) of a procedure of a data read process by a reader/writer of the second embodiment;
Figs. 21A and 21B are flowcharts (2) of a procedure of the data read process by the reader/writer of the second embodiment;
Fig. 22 is a flowchart (1) of a procedure of a data write process by the reader/writer of the second embodiment;
Figs. 23A and 23B are flowcharts (2) of a procedure of the data write process by the reader/writer of the second embodiment;
Fig. 24 is a flowchart of a procedure of an RFID tag of the second embodiment;
Fig. 25 depicts an example of a tag search instruction including a read instruction and a write instruction;
Fig. 26 depicts an example of a tag search instruction including a plurality of read instructions or write instructions;
Fig. 27 is a functional block diagram of the configuration of a computer that executes a reader/writer control program; and
Fig. 28 is an explanatory view of a conventional data access control method.

### DETAILED DESCRIPTION OF THE PREFERRED EMBODIMENTS

Exemplary embodiments of a reader/writer apparatus, a reader/writer control program, a data access system, and a data access control method according to the present invention will now be described in detail with reference to the accompanying drawings. In the following embodiments, application of the present invention to an ordinary RFID system will be described, which ordinary RFID system includes a host computer, a reader/writer, and an RFID tag.

To make the following embodiments more specific, the description will be made on a case where a command of ISO/IEC 18000-6 type B is used as a radio command exchanged between the reader/writer and the RFID tag. The present invention, however, is not limited to this case.

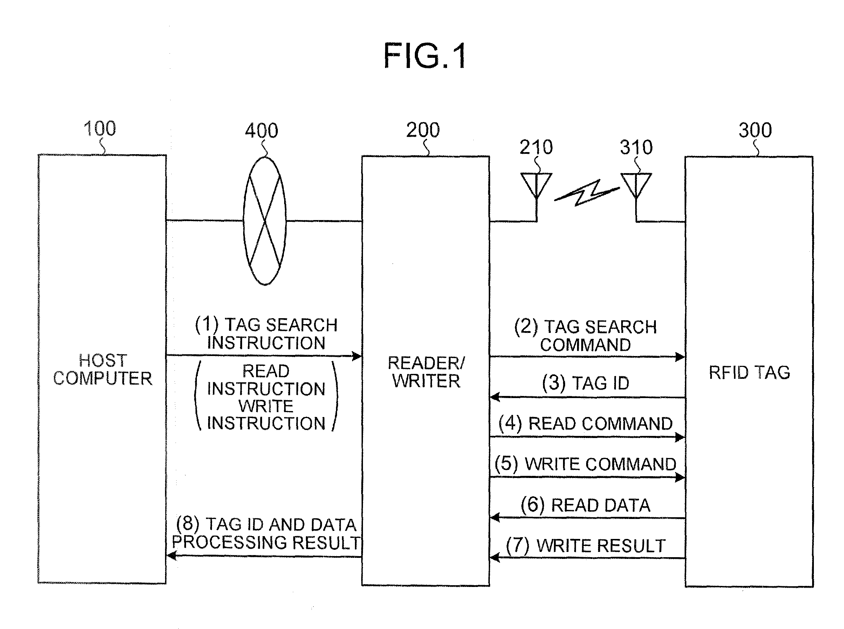

The concept of a method of data access to an RFID tag in an RFID system of a first embodiment will first be described. Fig. 1 is an explanatory view of the concept of a data access control method of the first embodiment.

Fig. 1 depicts an ordinary RFID system that includes a host computer 100 controlling a reader/writer 200, the reader/writer 200, and an RFID tag 300. In this RFID system, the host computer 100 and the reader/writer 200 communicate with each other via the network 400, and the reader/writer 200 and the RFID tag 300 communicate with each other by mutually transmitting/receiving radio waves through an antenna 210 of the reader/writer 200 and an antenna 310 of the RFID tag 300. Though only one RFID tag 300 is shown in Fig. 1, this RFID system may include a plurality of RFID tags 300, and may also include a plurality of reader/writers 200 and antennas 210.

In this configuration, the data access method of the first embodiment offers a feature of transmitting read instructions or write instructions, which are conventionally transmitted one by one from the host computer 100 for each RFID tag 300, all together at once through one tag search instruction.

Specifically, as shown in Fig. 1, the host computer 100 generates a tag search instruction including a read instruction or a write instruction, and transmits the generated tag search instruction to the reader/writer 200 ((1) shown in Fig. 1). The transmitted tag search instruction includes an address indicating a memory area of the RFID tag 300 used as the read address or write address of data to read or write, and the size of the data to read or write, which address and size are included as the read instruction or the write instruction.

Receiving the tag search instruction, the reader/writer 200 transmits a tag search command requesting transmission of a tag ID to RFID tags 300 present within a contact range of the antenna 210 ((2) shown in Fig. 1). The RFID tag 300 receiving this tag search command then transmits the tag ID of the RFID tag 300 to the reader/writer 200 as a response to the tag search command ((3) shown in Fig. 1).

When receiving the tag ID from the RFID tag 300, the reader/writer 200 transmits a data read command or a data write command to the RFID tag 300 identified by the tag ID on the basis of the read instruction or the write instruction included in the tag search instruction transmitted from the host computer 100 ((4) and (5) shown in Fig. 1).

The RFID tag 300 receiving the read command reads out data from a storage device (memory, etc.) incorporated in the RFID tag 300 on the basis of the received read command, and transmits the read out data to the reader/writer 200 ((6) shown in Fig. 1). The RFID tag 300 receiving the write command writes data on the storage device (memory, etc.) incorporated in the RFID tag 300 on the basis of the received write command, and transmits a write result, which indicates whether data writing has been completed normally, to the reader/writer 200 ((7) shown in Fig. 1).

When receiving data processing results (read data and write results) from all RFID tags 300 present within the contact range of the antenna 210, the reader/writer 200 then transmits the received data processing results and tag IDs all together to the host computer 100 ((8) shown in Fig. 1).

As described above, according to the data access control method of the first embodiment, the host computer 100 generates a tag search instruction including a read instruction or a write instruction and transmits the generated tag search instruction to the reader/writer 200. The reader/writer 200, when receiving the tag search instruction from the host computer 100, transmits a tag search command requesting transmission of a tag ID uniquely identifying the RFID tag 300, and, when receiving the tag ID transmitted from the RFID tag 300 as a response to the transmitted tag search command, transmits a data read command or a data write command to the RFID tag 300 identified by the tag ID on the basis of the read instruction or the write instruction included in the tag search instruction.

As a result, read instructions or write instructions, which are conventionally transmitted one by one from the host computer 100 for each RFID tag 300, can be transmitted all together at once through one tag search instruction. This reduces an amount of data exchanged between the host computer 100 and the reader/writer 200, and also reduces overhead occurring in communication between the host computer 100 and the reader/writer 200 when data reading and/or writing is carried out on the RFID tag 300.

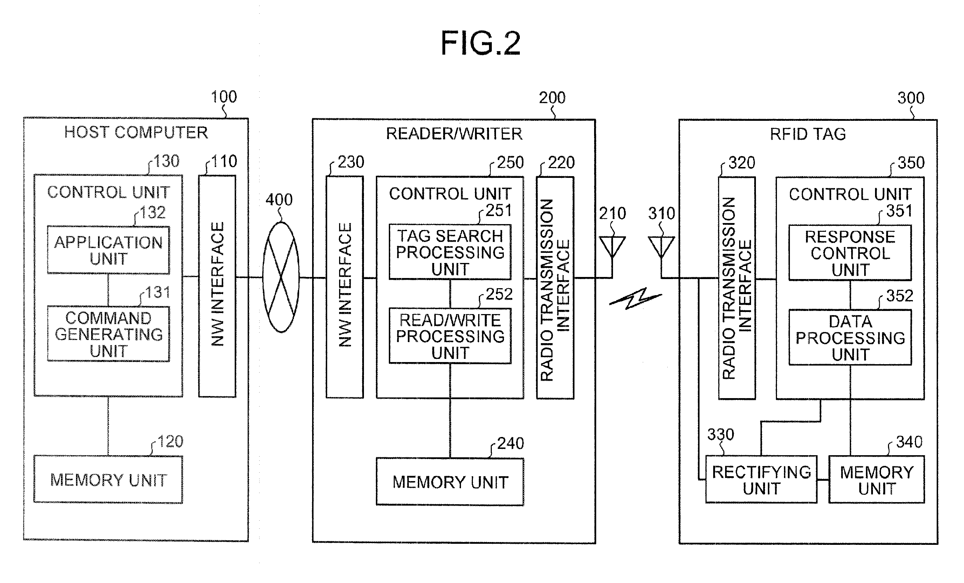

The configuration of the RFID system of the first embodiment will then be described. Fig. 2 is a functional block diagram of the configuration of the RFID system of the first embodiment. Fig. 2 depicts the configuration of the RFID system shown in Fig. 1. As shown in Fig. 2, this RFID system includes the host computer 100, the reader/writer 200, and the RFID tag 300.

The host computer 100 and the reader/writer 200 communicate with each other via the network 400, and the reader/writer 200 and the RFID tag 300 communicate with each other by mutually transmitting/receiving radio waves through the antenna 210 of the reader/writer 200 and the antenna 310 of the RFID tag 300. Though Fig. 2 depicts one reader/writer 200, one antenna 210, and one RFID tag 300, as Fig. 1 does, this RFID system may include a plurality of reader/writers 200, antennas 210, and RFID tags 300. The configuration of each component unit will now be described.

The configuration of the host computer 100 will be described first. The host computer 100 has an NW (Network) interface 110, a memory unit 120, and a control unit 130.

The Network interface 110 is a processing unit that controls transmission/reception of data exchanged between the host computer 100 and the reader/writer 200 via the network 400. For example, the Network interface 110 transmits a tag search instruction to the reader/writer 200, and receives a data processing result, such as read data and a write result, from the reader/writer 200, which data processing result is transmitted as a response to the tag search instruction.

The memory unit 120 is a nonvolatile memory that has stores thereon various data and programs. Particularly, the memory unit 120 has stores thereon such data related to an embodiment of the present invention as read area information and write area information that is used when data reading or writing on the RFID tag 300 is carried out.

The read area information is the information that includes an address indicating a memory area of the RFID tag 300 used as the read address of data to read, and the size of data to read (hereinafter "read address" and "read size"). The write area information is the information that includes an address indicating a memory area of the RFID tag 300 used as the address of data to write, the size of the data to write, and the data to write (hereinafter "write address", "write size", and "write data").

The control unit 130 has an internal memory that has stored thereon such a control program as an OS (Operation System) program, a program specifying various procedures, and necessary data. The control unit 130 is a processing unit that executes various processes using these programs and data. Particularly, in terms of functional conception, the control unit 130 is provided with a command generating unit 131 and an application unit 132 that are related to embodiments of the present invention.

The command generating unit 131 is a processing unit that generates various control commands transmitted to the reader/writer 200. Particularly, the command generating unit 131 generates a tag search instruction including a read instruction or a write instruction as an instruction related to embodiments of the present invention.

Specifically, the command generating unit 131 obtains the read area information and the write area information from the memory unit 120 in response to a request from the application unit 132, and generates a tag search instruction using the obtained read area information and write area information. In the above description, the read area information and write area information is stored on the memory unit 120, but the read area information and write area information may be input by a user in timing of transmitting a tag search command to the reader/writer 200.

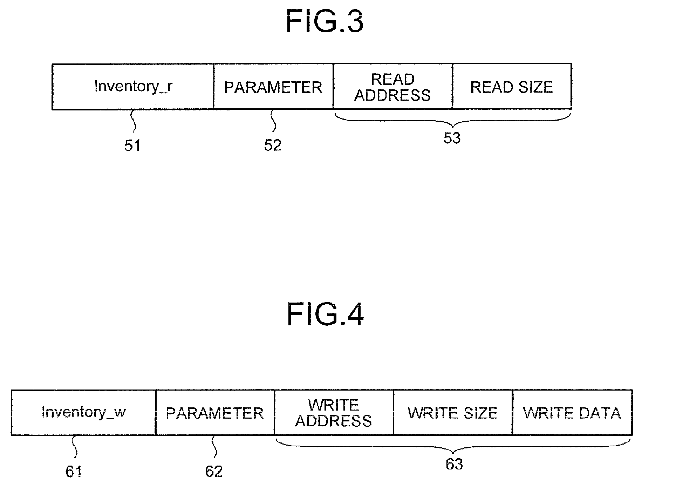

A tag search instruction generated by the command generating unit 131 is described here using Figs. 3 and 4. Fig. 3 depicts an example of a tag search instruction including a read instruction of the first embodiment. As shown in Fig. 3, this tag search instruction includes a control command (Inventory_r) 51 indicating that the tag search instruction includes a read instruction, a given parameter 52, and read instruction information 53.

The given parameter 52 is a parameter containing given control information necessary for communication, such as an error detection code (CRC: Cyclic Redundancy Check). The read instruction information 53 is the information that is necessary when the RFID tag 300 reads out data from a memory area, and includes the read size of data to read and a read address indicating the memory area of RFID tag 300 used as the read address of the data.

Fig. 4 depicts an example of a tag search instruction including a write instruction of the first embodiment. As shown in Fig. 4, this tag search instruction includes a control command (Inventory_w) 61 indicating that the tag search instruction includes a write instruction, a given parameter 62, and write instruction information 63.

The given parameter 62 is a parameter similar to the given parameter 52 of the Fig. 3. The write instruction information 63 is the information that is necessary when the RFID tag 300 writes data on a memory area, and includes the write size of data to write, a write address indicating the memory area of RFID tag 300 used as the write address of the data, and the write data to write.

Turning to Fig. 2, the application unit 132 is a processing unit that executes various transactions and that transmits a tag search instruction generated by the command generating unit 131 to the reader/writer 200.

Specifically, the application unit 132 executes various transactions, and requests the command generating unit 131 to generate a tag search command in given timing arising during execution of the transactions.

The given timing mentioned here is determined according to the kind of a transaction. For example, in a supermarket, etc., a charge is adjusted by reading product price information from an RFID tag attached to a product in a cart when the cart passes through a prescribed position near a cash register. In such a charge adjustment system, the giving timing means the timing of detection of the cart by a position sensor, etc., installed in a given place.

In another case, information on commodities is read out from or written in on RFID tags attached to commodities placed in a warehouse, etc., according to an instruction from a user. In such a commodity management system, the given timing means the timing of issue of the instruction by the user.

When the command generating unit 131 generates a search command, the application unit 132 transmits the generated search command to the reader/writer 200 via the NW interface 110.

When a data processing result, such as read data and a write result, is transmitted from the reader/writer 200 as a response to the transmitted search command, the application unit 132 obtains the incoming data processing result via the NW interface 110, and executes various transactions using the obtained data processing result.

The configuration of the reader/writer 200 will then be described. The reader/writer 200 has the antenna 210, a radio transmission interface 220, an NW interface 230, a memory unit 240, and a control unit 250.

The radio transmission interface 220 is a processing unit that carries out radio communication with the RFID tag 300 by transmitting and receiving radio waves via the antenna 210. For example, the radio transmission interface 220 transmits a read command or a write command to the RFID tag 300 through radio waves, and receives a data processing result, such as read data and a write result, from the RFID tag 300, which data processing result is transmitted as a response to the read command or the write command.

The NW interface 230 is a processing unit that controls transmission/reception of data exchanged between the host computer 100 and the reader/writer 200 via the network 400. For example, the Network interface 230 receives a tag search instruction from the host computer 100, and transmits a data processing result, such as read data and a write result, to the host computer 100, which data processing result is transmitted as a response to the tag search instruction.

The memory unit 240 is a nonvolatile memory that has stored thereon various data and programs. Particularly, the memory unit 240 has stored thereon such data related to embodiments of the present invention as a received tag ID from the RFID tag 300 and a data processing result (read data and a write result).

The control unit 250 has an internal memory that has stored thereon a control program for overall control over the reader/writer 200 and necessary data. The control unit 250 is a processing unit that executes various processes using these program and data. Particularly, in terms of functional conception, the control unit 250 is provided with a tag search processing unit 251 and a read/write processing unit 252 that are related to embodiments of the present invention.

The tag search processing unit 251 is a processing unit that transmits a tag search command to the RFID tag 300 when receiving a tag search instruction from the host computer 100. The tag search command mentioned here is a command that requests the RFID tag 300 to transmit a tag ID.

Specifically, when the tag search processing unit 251 receives a search instruction including a read instruction or a write instruction from the host computer 100 via the NW interface 230, the tag search processing unit 251 generates a tag search command and transmits the generated tag search command to RFID tags 300 present within the contact range via the radio transmission interface 220.

Upon receiving a response to the tag search command from the RFID tag 300 via the radio transmission interface 220, the tag search processing unit 251 determines that tag responses are colliding with each other when the received response is not the response from one RFID tag 300 (hereinafter "one-tag response"), in which case the tag search processing unit 251 generates a FAIL command to transmit it to RFID tags 300 present within the contact range.

When the received response is the one-tag response, on the other hand, the tag search processing unit 251 stores the read instruction information 53 (including a read address and a read size) of the tag search instruction in a readout area defined in a given place on the internal memory, and stores the write instruction information 63 (including a write address, a write size, and write data) of the tag search instruction in a write-in area defined in a given place on the internal memory.

The tag search processing unit 251 then instructs the read/write processing unit 252 to transmit a read command or a write command to the RFID tag 300 from which the one-tag response is transmitted to the tag search processing unit 251. The read command is a command requesting the RFID tag 300 to read out data, and the write command is a command requesting the RFID tag 300 to write data.

When the tag search processing unit 251 does not receive a response to the tag search command from the RFID tag 300 via the radio transmission interface 220 after the passage of a given time, the tag search processing unit 251 determines that the RFID tag 300 is making no response.

In such a case, the tag search processing unit 251 checks on whether no response of this time is the nth no response of consecutive no responses as the reader/writer 200 repeatedly transmits tag search commends. When no response of this time is not the nth no response of consecutive no responses, the tag search processing unit 251 generates a SUCCESS command to transmit it to RFID tags 300 present within the contact range.

When no response of this time is the nth no response of consecutive no responses, the tag search processing unit 251 determines that all RFID tags 300 present within the contact range have made responses, and generates an INITIALIZE command to transmit it to RFID tags 300 present within the contact range, and then transmits a tag ID and read data or a write result, which, are stored on the memory unit 240, to the host computer 100.

The tag search processing unit 251 may add, for example, information indicating whether data reading or writing has been completed normally to each tag ID as information to be transmitted to the host computer. When data reading and writing is carried out on divided pieces of data, which case will be described later, the tag search processing unit 251 may transmit read data or a write result only when reading or writing of every divided piece of data is successful, or may transmit only the divided piece of data read successfully or the write result of a divided piece of data written successfully.

The read/write processing unit 252 is a processing unit that when receiving a tag ID that is a response to a tag search command transmitted from the tag search processing unit 251, transmits a read command or a write command to the RFID tag identified by the tag ID on the basis of a read instruction or a write instruction included in a tag search instruction transmitted from the host computer 100.

The operation of the read/write processing unit 252 will then be described specifically. The operation with regard to transmission of a read command will first be described, and the operation with regard to transmission of a write command will then be described. In this description, the maximum size of data that can meet a request by a read command is eight bytes, and the maximum size of data that can meet a request by a write command is four bytes.

The operation with regard to transmission of a read command will first be described. When given an instruction of transmission of a read command, the read/write processing unit 252 checks a read size stored in the readout area, and, when the read size is larger than eight bytes, sets the read size on the read command.

The read/write processing unit 252 then backwardly shift a read address stored in the readout area by eight bytes, and subtracts eight bytes from the read size stored in the readout area. As a result of the read address shift, the address of the data portion starting from the ninth byte to follow, for which data portion a read command is not transmitted yet, is to be set on the next read command to transmit.

To indicate that a part of read data, which has not been set on the read command, remains to be set, the read/write processing unit 252 then turns on an area division flag, and sets the frequency of failure to zero, which frequency of failure is used for controlling retry transmission of the read command.

When the read size stored in the readout area is equal to or smaller than eight bytes, the read/write processing unit 252 sets the read address stored in the readout area on the read command, and, to indicate that the whole of the read data has been set on the read command, turns off the area division flag and sets the frequency of failure to zero.

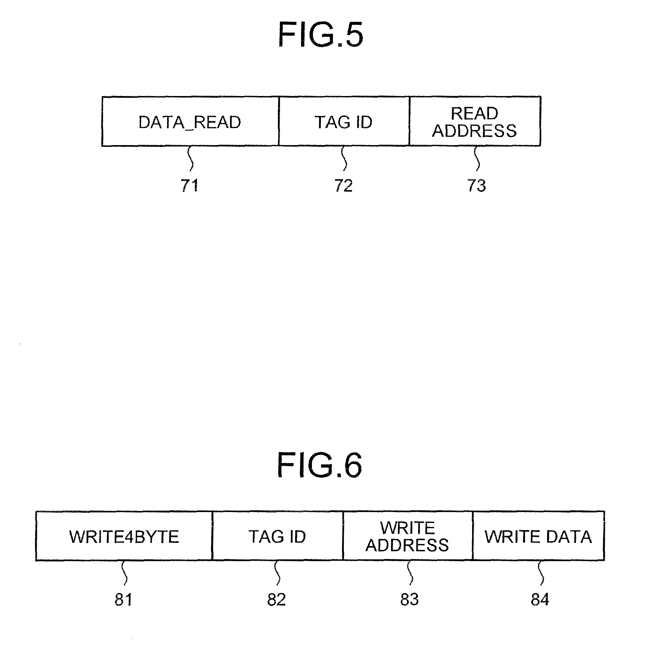

A read command generated by the read/write processing unit 252 is described here referring to Fig. 5. Fig. 5 depicts an example of a read command of the first embodiment. As shown in Fig. 5, the read command includes an access command (DATA_READ) 71 indicating that the command including the access command 71 is a read command, a tag ID 72, and a read address 73.

After setting a read address on a read command in the above manner, the read/write processing unit 252 specifies a tag ID received as the one-tag response, and transmits the read command. As a result, 8 byte data having a head address equivalent to the read address set on the read command is read at the RFID tag 300 identified by the tag ID.

When receiving read data transmitted from the RFID tag 300 as a response to the read command, the read/write processing unit 252 links the response read data to the tag ID and stores the linked read data and tag ID on the memory unit 240, and then checks on whether the area division flag is on.

When the area division flag is not on, or a read size stored in the readout area is zero even if the area division flag is on, the read/write processing unit 252 determines that the whole of the read data that is the subject of a read instruction transmitted from the host computer 100 has been read, and generates a SUCCESS command to transmits it to RFID tags 300 present within the contact range.

When the area division flag is on and the read size stored on the readout area is not zero, the read/write processing unit 252 determines that the whole of the read data that is the subject of the read instruction transmitted from the host computer 100 has not been read yet. To read the rest of the data to follow, the read/write processing unit 252 then sets the information stored in the readout area on a read command, specifies again a tag ID received as the one-tag response, and transmits the read command.

When the read/write processing unit 252 fails to receive read data from the RFID tag 300 as a response to a read command even after the passage of a given time, the read/write processing unit 252 adds 1 to the frequency of failure. When the frequency of failure is fewer than M (e.g., 2), the read/write processing unit 252 retries transmission of the read command. When the frequency of failure is equal to or more than M, the read/write processing unit 252 generates a SUCCESS command to transmit it to RFID tags 300 present within the contact range.

The operation with regard to transmission of a write command will then be described. When given an instruction of transmission of a write command, the read/write processing unit 252 transmits a read command (DATA_READ command), on which a received response tag ID, a given read address, and a given read size are set. This read command puts the RFID tag 300 identified by the tag ID into "DATA_EXCHANGE state" (the meaning of "DATA_EXCHANGE state" will be explained later).

The description is made here about a case where the read command (DATA_READ command) is transmitted to the RFID tag 300 before data writing on the RFID tag 300. If the specification of radio communication makes this procedure is unnecessary, however, transmission of the read command may be omitted.

Subsequently, receiving read data transmitted from the RFID tag 300 as a response to the DATA_READ command, the read/write processing unit 252 checks a write size stored in the write-in area, and, when the write size is larger than four bytes, sets the write address and the head four bytes of write data, which are stored in the write-in area, on a write command. In addition, the read/write processing unit 252 stores the rest of write data starting from the fifth byte to follow, which has not been set on the write command, in a remaining data area defined in a given area in the internal memory.

The read/write processing unit 252 then backwardly shifts the write address stored in the write-in area by four bytes, and subtracts four bytes from the write size also stored in the write-in area. As a result of the write address shift, the address of the data portion starting from the fifth byte to follow, for which data portion a write command is not transmitted yet, is to be set on the next write command to transmit.

To indicate that a part of write data, which has not been set on the write command, remains to be set, the read/write processing unit 252 then turns on the area division flag, and sets the frequency of failure to zero, which frequency of failure is used for controlling retry transmission of the write command.

When the write size stored in the write-in area is equal to or smaller than four bytes, the read/write processing unit 252 sets the write address and the write data, which are stored in the write-in area, on the write command, and, to indicate that the whole of the write data has been set on the write command, turns off the area division flag and sets the frequency of failure to zero.

A write command generated by the read/write processing unit 252 is described here referring to Fig. 6. Fig. 6 depicts an example of a write command of the first embodiment. As shown in Fig. 6, the write command includes an access command (WRITE4BYTE) 81 indicating that the command including the access command 81 is a write command, a tag ID 82, a write address 83, and write data 84.

After setting a write address and write data on a write command in the above manner, the read/write processing unit 252 specifies a tag ID received as the one-tag response, and transmits the write command. As a result, 4 byte data having a head address equivalent to the write address set on the write command is written at the RFID tag 300 identified by the tag ID.

When receiving a write result transmitted from the RFID tag 300 as a response to the write command, the read/write processing unit 252 links the response write result to the tag ID and stores the linked write result and tag ID on the memory unit 240, and then checks on whether the area division flag is on.

When the area division flag is not on, or a write size stored in the readout area is zero even if the area division flag is on, the read/write processing unit 252 determines that the whole of the write data that is the subject of a write instruction transmitted from the host computer 100 has been written, and generates a SUCCESS command to transmit it to RFID tags 300 present within the contact range.

The read/write processing unit 252 may retry data reading from the RFID tag 300 that has transmitted a write result not ensuring success in data writing as a response to the write command, confirm success in data writing, and then transmit a success command.

When the area division flag is on and the write size stored in the readout area is not zero, the read/write processing unit 252 determines that the whole of the write data that is the subject of a write instruction transmitted from the host computer 100 has not been written yet. To write the rest of the data to follow, read/write processing unit 252 then sets the rest of the data stored in the remaining data area as write data in the write-in area, and then sets the information in the write-in area on a write command, specifies again a tag ID received as the one-tag response, and transmits the write command.

When the read/write processing unit 252 fails to receive a write result from the RFID tag 300 as a response to a write command even after the passage of a given time, the read/write processing unit 252 adds 1 to the frequency of failure. When the frequency of failure is fewer than M (e.g., 2), the read/write processing unit 252 retries transmission of the write command. When the frequency of failure is equal to or more than M, the read/write processing unit 252 generates a SUCCESS command to transmit it to RFID tags 300 present within the contact range.

The configuration of the RFID tag 300 will then be described. The RFID tag 300 has the antenna 310, a radio transmission interface 320, a rectifying unit 330, a memory unit 340, and a control unit 350.

The radio transmission interface 320 is a processing unit that carries out radio communication with the reader/writer 200 by transmitting and receiving radio waves via the antenna 310. For example, the radio transmission interface 320 receives a read command or a write command from the reader/writer 200 through radio waves, and transmits a data processing result, such as read data and a write result, to the reader/writer 200, which data processing result is transmitted as a response to the read command or the write command.

The rectifying unit 330 is a processing unit that rectifies a received radio wave from the reader/writer 200 to generate electric power, and supplies the generated electric current to the memory unit 340 and the control unit 350.

The memory unit 340 is a nonvolatile memory that has stored thereon various data, etc. Particularly, the memory unit 340 has stored thereon such data related to an embodiment of the present invention as a tag ID and various data on transactions executed by the host computer 100.

The control unit 350 is a processing unit that carries out overall control over the RFID tag 300. Particularly, in terms of functional conception, the control unit 350 is provided with a response control unit 351 and a data processing unit 352 that are related to embodiments of the present invention.

The response control unit 351 is a processing unit that controls transmission of a tag ID and data reading or writing on the memory unit 340 on the basis of various commands transmitted from the reader/writer 200.

Specifically, when the response control unit 351 receives a tag search command transmitted from the reader/writer 200 via the radio transmission interface 320, the response control unit 351 carries out a collision arbitration process, and transmits the tag ID to the reader/writer 200 according to a result of the collision arbitration process. The collision arbitration process mentioned here is a process of preventing such an accident that the reader/writer becomes incapable of communication as response tag IDs from a plurality of RFID tags 300 are transmitted simultaneously to the reader/writer. The collision arbitration process is also called an anticollision process. A variety of techniques have been suggested as such a collision arbitration process, and which technique to use is not specified here.

For example, one of available methods is to generate random numbers in timing of reception of a tag search command and determine on whether or not to make a response to the reader/writer according to whether an obtained random number satisfies a given numerical condition.

When receiving a command transmitted from the reader/writer 200 via the radio transmission interface 320, the response control unit 351 checks the type of the received command. When the received command is a read command (DATA_READ command), the RFID tag 300 becomes "DATA_EXCHANGE state".

This "DATA_EXCHANGE state" represents a state of the RFID tag 300 that the RFID tag 300 is ready for data transmission/reception. When the RFID tag 300 becomes this state, the response control unit 351 does not transmit the tag ID in response to a tag search command transmitted from the reader/writer 200.

In this case, the response control unit 351 controls the data processing unit 352 to read out data from the memory unit 340 on the basis of a read address included in the read command, and transmits the read out data to the reader/writer 200 via the radio transmission interface 320.

The response control unit 351 transmits the tag ID again when the received command is a SUCCESS command, carries out the collision arbitration process again when the received command is a FAIL command, and initializes various setting of the RFID tag 300 to wait for reception of the next search command when the received command is an INITIALIZE command.

When receiving another command transmitted from the reader/writer 200 via the radio transmission interface 320, the response control unit 351 checks the type of the received command. When the received command is a read command, the response control unit 351 reads out data from the memory unit 340 on the basis of a read address included in the read command, and transmits the read out data to the reader/writer 200 via the radio transmission interface 320.

When the received command is a write command, the response control unit 351 writes data on the memory unit 340 on the basis of a write address and write data included in the write command, and transmits a write result to the reader/writer 200.

The response control unit 351 waits for reception of the next command when the received command is a SUCCESS command, and initializes various setting of the RFID tag 300 to wait for reception of the next search command when the received command is an INITIALIZE command.

The data processing unit 352 is a processing unit that carries out data reading or writing on the memory unit 340 on the basis of an instruction from the response control unit 351. The data processing unit 352 sends read out data to the response control unit 351 as read data when carrying out data reading, and sends information indicating whether writing has been completed correctly to the response control unit 351 as a write result when carrying out data writing.

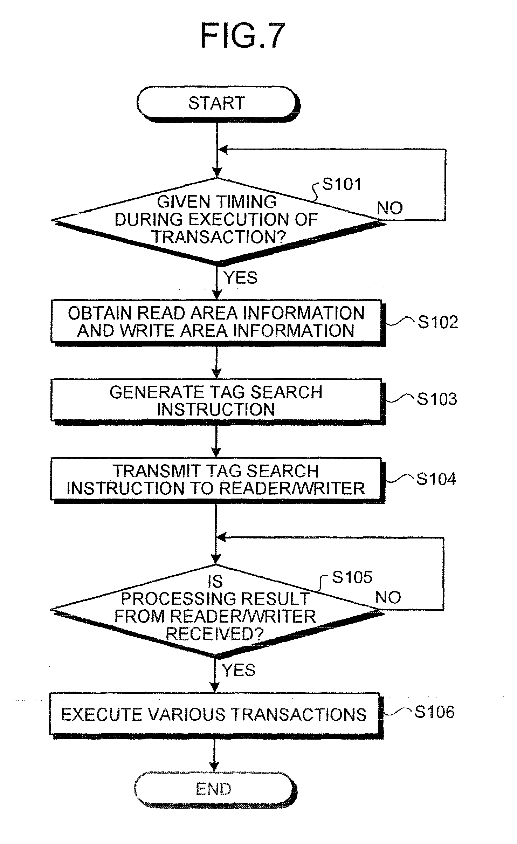

Procedures of the host computer 100, the reader/writer 200, and the RFID tag 300 of the first embodiment will then be described referring to Figs. 7 to 12. With respect to the procedure of the reader/writer 200, a data read process carried out upon reading data from the RFID tag 300 and a data write process carried out upon writing data on the RFID tag 300 will be described. In the following description, the read command and the write command as described above will be called "DATA_READ command" and "WRITE4BYTE command", respectively. Commands used for data reading/writing in the present invention, however, are not limited to these commands.

First, the procedure of the host computer 100 of the first embodiment will be described. Fig. 7 is a flowchart of the procedure of the host computer 100 of the first embodiment. As shown in Fig. 7, when the application unit 132 detects given timing that arises during execution of transactions (Yes at step S101), the host computer 100 requests the command generating unit 131 to generate a tag search instruction.

Responding to the request from the application unit 132, the command generating unit 131 obtains read area information and write area information stored on the memory unit 120 (step S102), and generates a tag search instruction on the basis of the obtained read area information and write area information (step S103). When the command generating unit 131 generates the tag search instruction, the application unit 132 transmits the generated tag search instruction to the reader/writer 200 (step S104).

Subsequently, when the NW interface 110 receives a data processing result, such as a tag ID, read data, and a write result, from the reader/writer 200, the data processing result being received as a response to the tag search instruction (Yes at step S105), the application unit 132 executes various transactions using the data processing result (step S106).

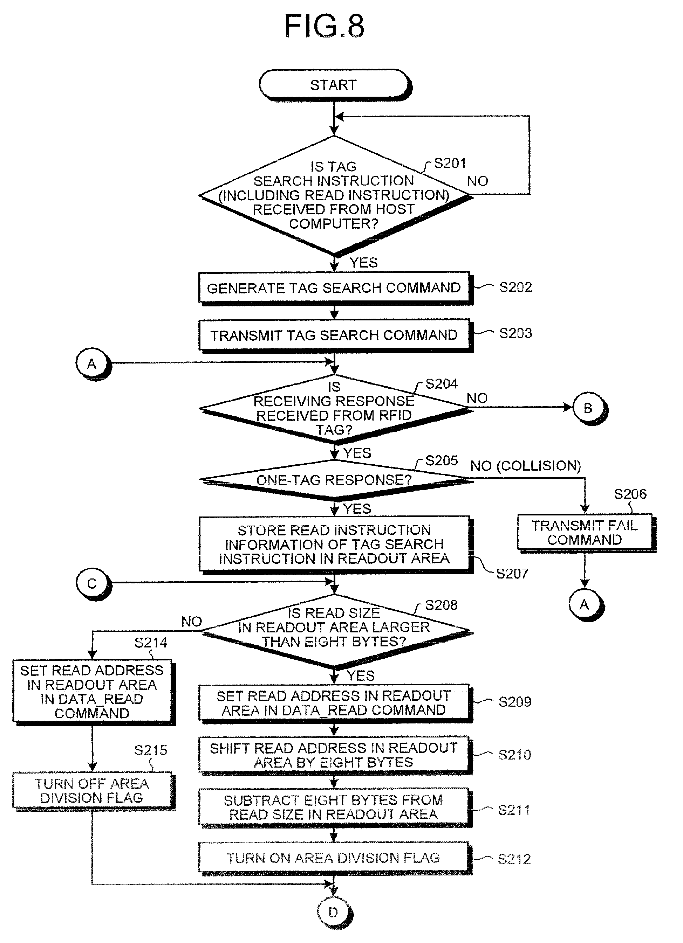

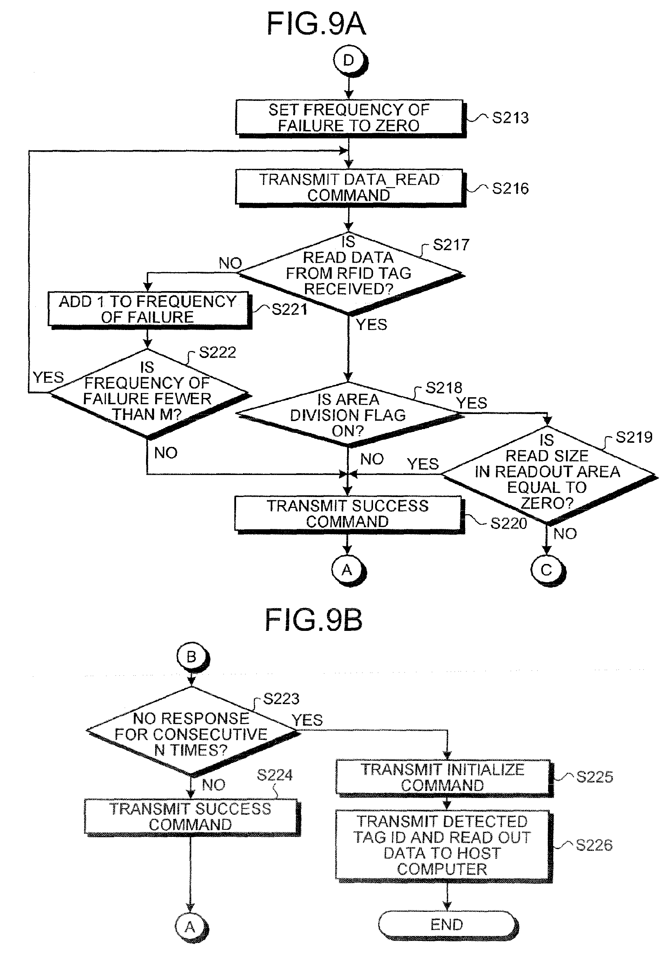

The procedure of the data read process by the reader/writer 200 of the first embodiment will then be described. Figs. 8, 9A, and 9B are flowcharts (1) and (2) of the procedure of the data read process by the reader/writer 200 of the first embodiment. As shown in Figs. 8, 9A, and 9B, when the reader/writer 200 receives a tag search instruction including a read instruction from the host computer 100 (Yes at step S201), the tag search processing unit 251 generates a tag search command (step S202), and transmits the generated tag search command to RFID tags 300 present within the contact range of the antenna 210 via the radio transmission interface 220 (step S203).

Upon receiving a response to the tag search command from the RFID tag 300 via the radio transmission interface 220 (Yes at step S204), the tag search processing unit 251 determines that tag responses are colliding with each other when the received response is not the one-tag response (No at step S205). The tag search processing unit 251 then generates a FAIL command to transmit it to RFID tags 300 present within the contact range (step S206), and then returns to step S204 to continue processes to follow.

When the received response is the one-tag response (Yes at step S205), on the other hand, the tag search processing unit 251 stores the read instruction information 53 (including a read address and a read size) of the tag search instruction in the readout area defined in the given place in the internal memory (step S207), and then instructs the read/write processing unit 252 to transmit a read command.

The read/write processing unit 252 instructed to transmit the read command checks a read size stored in the readout area, and, when the read size is larger than eight bytes (Yes at step S208), sets a read address stored in the readout area on the DATA_READ command (step S209).

Through this DATA_READ command, 8 byte data having a head address equivalent to the read address set on the DATA_READ command is read out from the RFID tag 300. The read/write processing unit 252 then shifts the read address stored in the readout area by eight bytes (step S210), and subtracts eight bytes from the read size stored in the readout area (step S211).

To indicate that a part of the read data, which has not been set on the DATA_READ command, remains to be set, the read/write processing unit 252 then turns on the area division flag (step S212), and sets the frequency of failure to zero, which frequency of failure is used for controlling retry transmission of the DATA_READ command (step 8213).

When the read size stored in the readout area is equal to or smaller than eight, bytes (No at step S208), the read/write processing unit 252 sets the read address stored in the readout area on the DATA_READ command (step S214). To indicate that the whole of the read data has been set on the DATA_READ command, the read/write processing unit 252 turns off the area division flag (step S215) and then sets the frequency of failure to zero (step S213).

After setting the read address on the DATA_READ command in this manner, the read/write processing unit 252 specifies a tag ID received as the one-tag response, and transmits the DATA_READ command (step S226).

When receiving read data transmitted from the RFID tag 300 as a response to the DATA_READ command (Yes at step S217), the read/write processing unit 252 links the response read data to the tag ID and stores the linked read data and tag ID on the memory unit 240, and then checks on whether the area division flag is on.

When the area division flag is not on (No at step S218), or the read size stored in the readout area is zero (Yes at step S219) even if the area division flag is on (Yes at step S218), the read/write processing unit 252 determines that the whole of the read data that is the subject of the read instruction transmitted from the host computer 100 has been read, and generates a SUCCESS command to transmits it to RFID tags 300 present within the contact range (step S220).

When the area division flag is on (Yes at step S218) and the read size stored in the readout area is not zero (No at step S219), the read/write processing unit 252 determines that the whole of the read data that is the subject of the read instruction transmitted from the host computer 100 has not been read yet, and returns to step S208 to continue processes to follow.

When the read/write processing unit 252 fails to receive read data from the RFID tag 300 as a response to the DATA_READ command even after the passage of the given time (No at step S217), the read/write processing unit 252 adds 1 to the frequency of failure (step S221).

When the frequency of failure is fewer than M (e.g., 2) (Yes at step S222), the read/write processing unit 252 returns to step S216, and retries transmission of the DATA_READ command. When the frequency of failure is equal to or more than M (No at step S222), the read/write processing unit 252 generates a SUCCESS command to transmit it to RFID tags 300 present within the contact range (step S220).

At step S204, when the radio transmission interface 220 does not receive the response to the tag search command from the RFID tag 300 even after the passage of the given time (No at step S204), the read/write processing unit 252 determines that the RFID tag 300 is making no response.

When no response of this time is not the nth no response of consecutive no responses as the reader/writer 200 repeatedly transmits tag search commends (No at step S223), the tag search processing unit 251 generates a SUCCESS command to transmit it to RFID tags 300 present within the contact range (step S224), and then returns to step S204 to continue processes to follow.

When no response of this time is the nth no response of consecutive no responses (Yes at step S223), the tag search processing unit 251 determines that all RFID tags 300 present within the contact range have made responses. The tag search processing unit 251 then generates an INITIALIZE command to transmit it to RFID tags 300 present within the contact range (step S225), transmits the tag ID and read data stored on the memory unit 240 to the host computer 100 as the detected tag ID and read out data (step S226), and then ends the data read process.

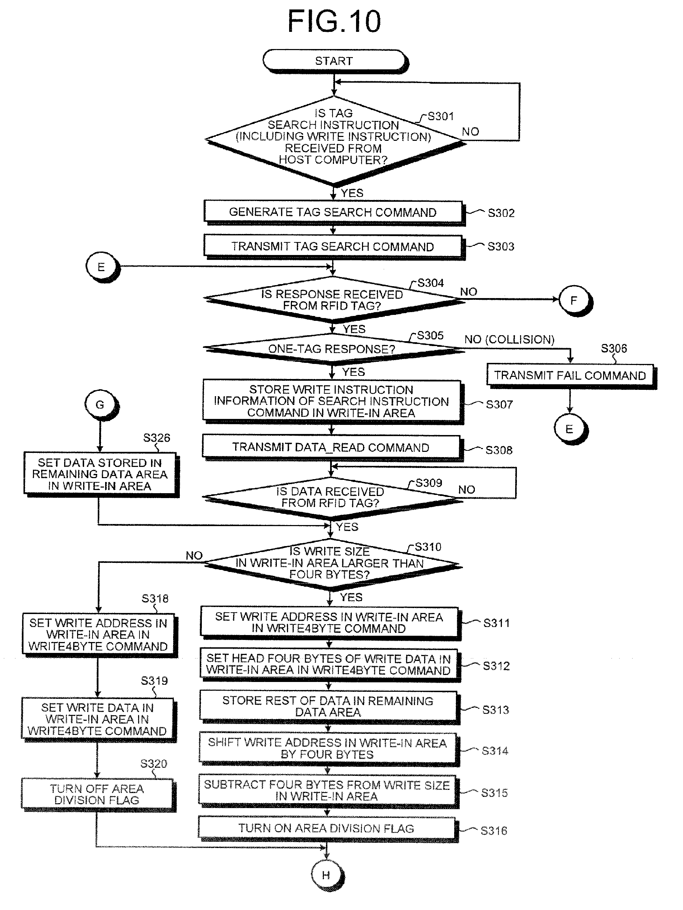

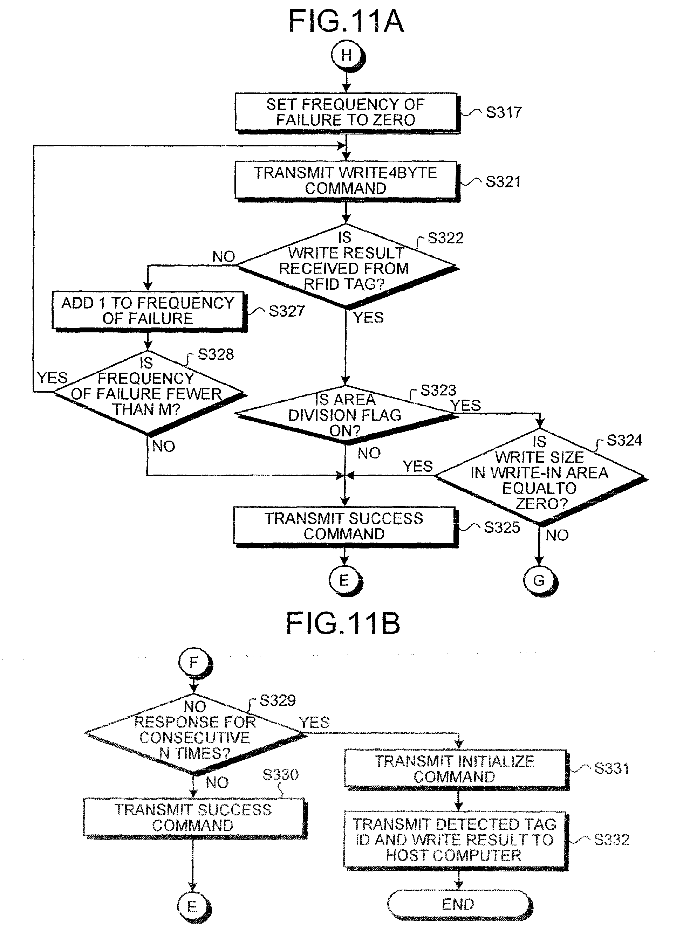

The procedure of the data write process by the reader/writer 200 of the first embodiment will then be described. Figs. 10 and 11 are flowcharts (1) and (2) of the procedure of the data write process by the reader/writer 200 of the first embodiment. As shown in Figs. 10 and 11, when the reader/writer 200 receives a search instruction including a write instruction from the host computer 100 (Yes at step S301), the reader/writer 200 generates a tag search command (step S302), and transmits the generated tag search command to RFID tags 300 present within the contact range of the antenna 210 (step S303).

When the radio transmission interface 220 receives a response to the tag search command from the RFID tag 300 (Yes at step S304), the read/write processing unit 252 determines that tag responses are colliding with each other when the received response is not the one-tag response (No at step S305), and generates a FAIL command to transmit it to RFID tags 300 present within the contact range (step S306), and then returns to step S304 to continue processes to follow.

When the received response is the one-tag response (Yes at step S305), on the other hand, the tag search processing unit 251 stores the write instruction information 63 (including a write address, a write size, and write data) of the tag search instruction in the write-in area defined in the given place on the internal memory (step S307), and then instructs the read/write processing unit 252 to transmit a write command.

The read/write processing unit 252 instructed to transmit the write command transmits a DATA_READ command, on which a response tag ID, a given read address, and a given read size are set (step S308). This puts the RFID tag identified by the tag ID into "DATA_EXCHANGE state".

Subsequently, receiving read data transmitted from the RFID tag 300 as a response to the DATA_READ command (Yes at step S309), the read/write processing unit 252 checks the write size stored in the write-in area, and, when the write size is larger than four bytes (Yes at step S310), sets the write address and the head four bytes of write data, which are stored in the write-in area, on a WRITE4BYTE command (steps S311 and S312). The read/write processing unit 252 then stores the rest of the write data staring from the fifth byte to follow in the remaining data area defined in the given area on the internal memory (step S313).

The read/write processing unit 252 then shifts the write address stored in the write-in area by four bytes (step S314), and subtracts four bytes from the write size stored in the write-in area (step S315).

To indicate that a part of the write data, which has not been set on the WRITE4BYTE, remains to be set, the read/write processing unit 252 turns on the area division flag (step S316), and then sets the frequency of failure to zero (step S317), which frequency of failure is used for controlling retry transmission of the WRITE4BYTE command.

When the write size stored in the write-in area is equal to or smaller than four bytes (No at step S310), the read/write processing unit 252 sets the write address and the write data, which are stored in the write-in area, on the WRTTE4BYTE command (steps S318 and S319), and, to indicate that the whole of the write data has been set on the WRITE4BYTE command, turns off the area division flag (step S320) and then sets the frequency of failure to zero (step S317).

After setting the write address on the MRITE4BYTE command in this manner, the read/write processing unit 252 specifies a tag ID received as the one-tag response, and transmits the WRITE4BYTE command (step S321).

When receiving a write result transmitted from the RFID tag 300 as a response to the WRITE4BYTE command (Yes at step S322), the read/write processing unit 252 links the response write result to the tag ID and stores the linked write result and tag ID on the memory unit 240, and then checks on whether the area division flag is on.

When the area division flag is not on (No at step S323), or the write size stored in the write-in area is zero (Yes at step S324) even if the area division flag is on (Yes at step S323), the read/write processing unit 252 determines that the whole of the write data that is the subject of the write instruction transmitted from the host computer 100 has been read, and generates a SUCCESS command to transmits it to RFID tags 300 present within the contact range (step S325).

When the area division flag is on (Yes at step S323) and the write size stored in the write-in area is not zero (No at step S324), the read/write processing unit 252 determines that the whole of the write data that is the subject of the write instruction transmitted from the host computer 100 has not been written yet, and sets the data stored in the remaining data area in the write-in area (step S326), and then returns to step S310 to continue processes to follow.

When the read/write processing unit 252 fails to receive a write result from the RFID tag 300 as a response to the WRITE4BYTE command even after the passage of the given time (No at step S322), the read/write processing unit 252 adds 1 to the frequency of failure (step S327).

When the frequency of failure is fewer than M (e.g., 2) (Yes at step S328), the read/write processing unit 252 returns to step S321, and retries transmission of the WRITE4BYTE command. When the frequency of failure is equal to or more than M (No at step S328), the read/write processing unit 252 generates a SUCCESS command to transmit it to RFID tags 300 present within the contact range (step S325).

At step S304, when the radio transmission interface 220 does not receive the response to the tag search command from the RFID tag 300 even after the passage of the given time (No at step S304), the read/write processing unit 252 determines that the RFID tag 300 is making no response.

When no response of this time is not the nth no response of consecutive no responses as the reader/writer 200 repeatedly transmits tag search commends (No at step S329), the tag search processing unit 251 generates a SUCCESS command to transmit it to RFID tags 300 present within the contact range (step S330), and then returns to step S304 to continue processes to follow.

When no response of this time is the nth no response of consecutive no responses (Yes at step S329), the tag search processing unit 251 determines that all RFID tags 300 present within the contact range have made responses. The tag search processing unit 251 then generates an INITIALIZE command to transmit it to RFID tags 300 present within the contact range (step S331), transmits the tag ID and write data stored on the memory unit 240 to the host computer 100 as the detected tag ID and write result (step S332), and then ends the data write process.

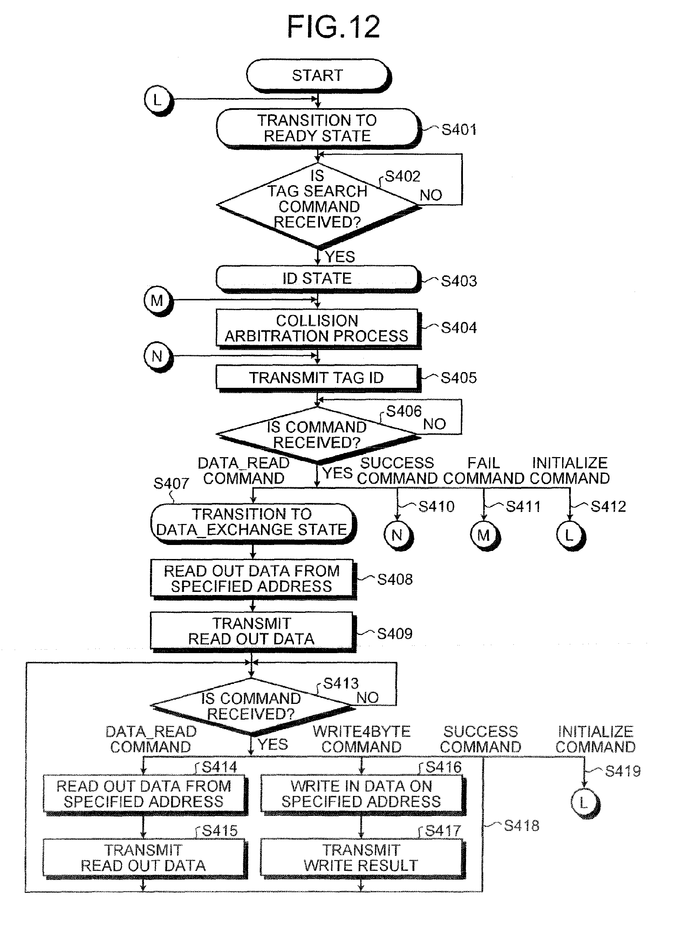

The procedure of the RFID tag 300 of the first embodiment will then be described. Fig. 12 is a flowchart of the procedure of the RFID tag 300 of the first embodiment. At the RFID tag 300, when the antenna 310 receives radio waves transmitted from the reader/writer 200, the rectifying unit 330 rectifies the radio waves to generate power and supplies the generated power to the control unit 350 and the memory unit 340, as shown in Fig. 12. This puts the RFID tag 300 into "READY state" (step S401).

When the response control unit 351 receives a search command transmitted from the reader/writer 200 via the radio transmission interface 320 (Yes at step S402), the RFID tag 300 becomes "ID state" (step S403). Subsequently, the response control unit 351 carries out the collision arbitration process (step S404), and transmits a tag ID to the reader/writer 200 according to a result of the collision arbitration process (step S405).

When the RFID tag 300 receives a command transmitted from the reader/writer 200 via the radio transmission interface 320 (Yes at step 406), the response control unit 351 checks the type of the received command.

When the received command is a DATA_READ command, the RFID tag 300 becomes "DATA_EXCHANGE state" (step S407), in which state the data processing unit 352 under control of the response control unit 351 reads out data from the memory unit 340 on the basis of a read address included in the DATA_READ command (step S408), and transmits the read out data to the reader/writer 200 via the radio transmission interface 320 (step S409).

When the received command is a SUCCESS command (step S411), the response control unit 351 returns to step S406, retransmits the tag ID, and continues processes to follow. When the received command is a FAIL command (step S412), the response control unit 351 returns to step S405, carries out the collision arbitration process again, and continues processes to follow. When the received command is an INITIALIZE command (step S413), the response control unit 351 returns to step S401, initializes various setting of the RFID tag 300 to wait for reception of the next search command.

When receiving another command transmitted from the reader/writer 200 via the radio transmission interface 320 (Yes at step S413), the response control unit 351 checks the type of the received command. When the received command is a DATA_READ command, the response control unit 351 reads out data from a specified address on the memory unit 340 on the basis of a read address included in the DATA_READ command (step S414), and transmits the read out data to the reader/writer 200 via the radio transmission interface 320 (step S415).

When the received command is a WRITE4BYTE command, the response control unit 351 writes data on a specified address on the memory unit 340 on the basis of a write address and write data included in the WRITE4BYTE command (step S416), and transmits a write result to the reader/writer 200 (step S417).

When the received command is a SUCCESS command (step S418), the response control unit 351 returns to step S413, and waits for reception of the next command. When the received command is an INITIALIZE command (step S419), the response control unit 351 returns to step S401, initializes various setting of the RFID tag 300, and waits for reception of the next search command.

In the first embodiment as described above, at the host computer 100, the command generating unit 131 generates a tag search instruction including a read instruction or a write instruction, and the application unit 132 transmits the generated tag search instruction to the reader/writer 200. At the reader/writer 200, the tag search processing unit 251, when receiving the tag search instruction from the host computer 100, transmits a tag search command requesting transmission of a tag ID uniquely identifying the RFID tag 300, and the read/write processing unit 252, when receiving a tag ID transmitted from the RFID tag 300 as a response to the tag search command, transmits a data read command or a data write command to the RFID tag 300 identified by the tag ID on the basis of the read instruction or the write instruction included in the tag search command.

As a result, read instructions or write instructions, which are conventionally transmitted one by one from the host computer 100 to each RFID tag 300, can be transmitted all together at once through one tag search instruction. This reduces an amount of data exchanged between the host computer 100 and the reader/writer 200, and also reduces overhead occurring in communication between the host computer 100 and the reader/writer 200 when data reading and/or writing is carried out on the RFID tag 300.

In the first embodiment, a tag search instruction transmitted from the host computer 100 includes the read size or the write size of data to read or write. At the reader/writer 200, when the read size or the write size included in the tag search instruction exceeds the maximum size of data that can meet a request by a read command or a write command, the read/write processing unit 252 determines a size equal to or smaller than the maximum size to be the size of data that meets the request by the read command or the write command, and transmits read commands or write commands for a plurality of pieces of data divided for each determined size.

As a result, read instructions or write instructions can be transmitted all together even if data to read or write has a size exceeding the maximum size of data that can meet a request by a read command or a write command. This further reduces overhead occurring in communication between the host computer 100 and the reader/writer 200 when data reading and/or writing is carried out on the RFID tag 300.

In the first embodiment, the description is made on a case where the RFID tag 300 is controlled to refrain from transmitting a tag ID in response to a tag search command transmitted from the reader/writer 200 when the RFID tag 300 becomes the DATA_EXCHANGE state. This control is carried out, for example, in such a way that the RFID tag 300 temporarily stores a flag indicating normal transmission of the tag ID in response to the tag search command on a temporary memory (volatile memory).

In this case, the RFID tag stores the flag in the temporal memory in timing of the RFID tag's becoming the DATA_EXCHANGE state. The RFID tag checks on whether the flag is stored on the temporal memory when receiving a tag search command, and, if the flag is stored, does not transmit the tag ID in response to the search command.

However, when the RFID tag 300 is, for example, a passive RFID tag without a battery, the flag stored on the temporal memory may be cleared. This is because that the passive RFID tag is supplied with power through radio waves transmitted from the reader/writer, and power supply may be cut off when the passive RFID tag is out of the contact range of the antenna of the reader/writer or is used in an environment with a poor radio transmission condition even if the passive RFID tag is within the contact range, in which case the information stored on the memory cannot be maintained.

For this reason, when a passive RFID tag is used, information for determination on whether or not to make a tag ID response to a tag search command (hereinafter "response control information") may be explicitly stored on a nonvolatile memory generally incorporated in the RFID tag.

The following description relates to a case of use of the response control information in the RFID tag, which is described as a second embodiment. For convenience, the units of the second embodiment that serve in the same way as the functional units shown in the reference figures of the first embodiment will be denoted by the same reference numerals.

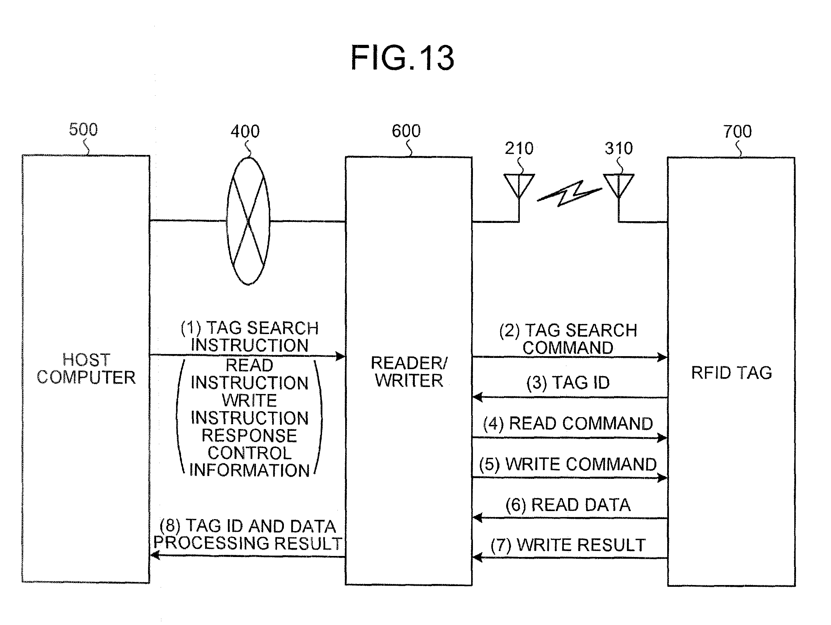

The concept of a method of data access to an RFID tag in an RFID system of the second embodiment will first be described. Fig. 13 is an explanatory view of the concept of a data access control method of the second embodiment.

Fig. 13 depicts an ordinary RFID system that includes a host computer 500 controlling a reader/writer 600, the reader/writer 600, and an RFID tag 700. In this RFID system, the host computer 500 and the reader/writer 600 communicate with each other via the network 400, and the reader/writer 600 and the RFID tag 700 communicate with each other by mutually transmitting/receiving radio waves through the antenna 210 of the reader/writer 600 and the antenna 310 of the RFID tag 700. Though only one RFID tag 700 is shown in Fig. 13, this RFID system may include a plurality of RFID tags 700, and may also include a plurality of reader/writers 600 and antennas 210.

In this configuration, the data access method of the second embodiment offers a feature of transmitting read instructions or write instructions, which are conventionally transmitted one by one from the host computer 500 for each RFID tag 700, all together at once through one tag search instruction.

Specifically, as shown in Fig. 13, the host computer 500 generates a tag search instruction including a read instruction or a write instruction, and then transmits the generated tag search instruction to the reader/writer 600 ((1) shown in Fig. 13). The transmitted tag search instruction includes an address indicating a memory area of the RFID tag 700 used as the read address or the write address of data to read or write, and the size of the data to read or write, which address and size are included as the read instruction or the write instruction. The tag search instruction also includes response control information that is generated uniquely for every transmission of a tag search instruction.

Receiving the tag search instruction, the reader/writer 600 transmits a tag search command requesting transmission of a tag ID to RFID tags 700 present within a contact range of the antenna 210 ((2) shown in Fig. 13). This tag search command includes the response control information transmitted from the host computer 500.

The RFID tag 700 receiving this tag search command then stores the response control information included in the tag search command on a nonvolatile memory, and compares this response control information with response control information included in a tag search command received at the last time. When both pieces of response control information are different from each other, the RFID tag 700 transmits its tag ID to the reader/writer 600 as a response to the received tag search command ((3) shown in Fig. 13).

When receiving the tag ID from the RFID tag 700, the reader/writer 600 transmits a data read command or a write command to the RFID tag 700 identified by the tag ID on the basis of the read instruction or the write instruction included in the tag search instruction transmitted from the host computer 500 ((4) and (5) shown in Fig. 13).

The RFID tag 700 receiving the read command reads out data from a storage device (memory, etc.) incorporated in the RFID tag 700 on the basis of the received read command, and transmits the read out data (read data) to the reader/writer 600 ((6) shown in Fig. 13). The RFID tag 700 receiving the write command writes data on the storage device incorporated in the RFID tag 700 on the basis of the received write command, and transmits a write result, which indicates whether data writing has been completed normally, to the reader/writer 600 ((7) shown in Fig. 13).

When receiving data processing results (read data and write results) from all RFID tags 700 present within the contact range of the antenna 210, the reader/writer 600 then transmits received data processing results and tag IDs all together to the host computer 500 ((8) shown in Fig. 13).

As described above, according to the data access control method of the second embodiment, the host computer 500 generates a tag search instruction including a read instruction or a write instruction and transmits the generated tag search instruction to the reader/writer 600. The reader/writer 600, when receiving the tag search instruction from the host computer 500, transmits a tag search command requesting transmission of a tag ID uniquely identifying the RFID tag 700, and, when receiving the tag ID transmitted from the RFID tag 700 as a response to the transmitted tag search command, transmits a data read command or a data write command to the RFID tag 700 identified by the tag ID on the basis of the read instruction or the write instruction included in the tag search instruction.

As a result, read instructions or write instructions, which are conventionally transmitted one by one from the host computer 500 for each RFID tag 700, may be transmitted all together at once through one tag search instruction. This reduces an amount of data exchanged between the host computer 500 and the reader/writer 600, and also reduces overhead occurring in communication between the host computer 500 and the reader/writer 600 when data reading and/or writing is carried out on the RFID tag 700.

In addition, in the second embodiment, the RFID tag 700 stores response control information unique in contents for each tag search command on the nonvolatile memory, and, when receiving a tag search command, compares response control information included in the received tag search command with the stored response control information. When both pieces of response control information are different from each other, the RFID tag 700 transmits its tag ID. This prevents repeated transmission of tag IDs in response to the same tag search command.

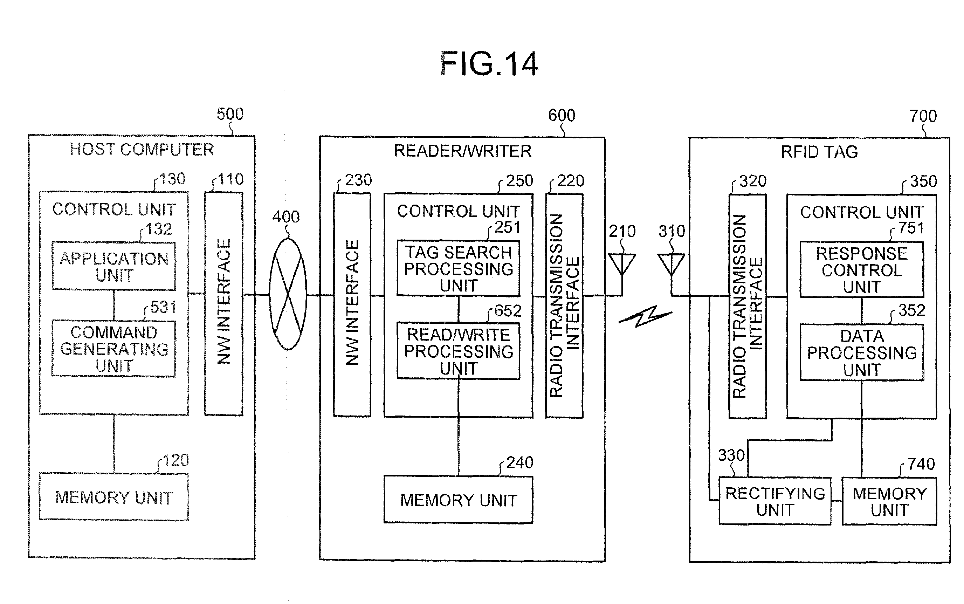

The configuration of the RFID system of the second embodiment will then be described. Fig. 14 is a functional block diagram of the configuration of the RFID system of the second embodiment. Fig. 14 depicts the configuration of the RFID system shown in Fig. 13. As shown in Fig. 14, this RFID system includes the host computer 500, the reader/writer 600, and the RFID tag 700.

The host computer 500 and the reader/writer 600 communicate with each other via the network 400, and the reader/writer 600 and the RFID tag 700 communicate with each other by mutually transmitting/receiving radio waves through the antenna 210 of the reader/writer 600 and the antenna 310 of the RFID tag 700. Though Fig. 14 depicts one reader/writer 600, one antenna 210, and one RFID tag 700, as Fig. 13 does, this RFID system may include a plurality of reader/writers 600, antennas 210, and RFID tags 700. The configuration of each component unit will now be described.

The configuration of the host computer 500 will be described first. The host computer 500 has the NW (Network) interface 110, the memory unit 120, and the control unit 130.

The Network interface 110 is a processing unit that controls transmission/reception of data exchanged between the host computer 500 and the reader/writer 600 via the network 400. For example, the Network interface 110 transmits a tag search instruction to the reader/writer 600, and receives a data processing result, such as read data and a write result, from the reader/writer 600, which data processing result is transmitted as a response to the tag search instruction.

The memory unit 120 is a nonvolatile memory that has stored thereon various data and programs. Particularly, the memory unit 120 has stored thereon such data related to embodiments of the present invention as read area information and write area information that is used when data reading and writing on the RFID tag 700 is carried out.

The read area information is the information that includes an address indicating a memory area of the RFID tag 700 used as the read address of data to read, and the size of data to read (hereinafter "read address" and "read size"). The write area information is the information that includes an address indicating a memory area of the RFID tag 700 used as the write address of data to write, the size of data to write, and the data to write (hereinafter "write address", "write size", and "write data").

The control unit 130 has an internal memory that has stored thereon such a control program as an OS (Operation System) program, a program specifying various procedures, and necessary data. The control unit 130 is a processing unit that executes various processes using these programs and data. Particularly, in terms of functional conception, the control unit 130 is provided with a command generating unit 531 and the application unit 132 that are related to embodiments of the present the present invention.

The command generating unit 531 is a processing unit that generates various control commands transmitted to the reader/writer 600. Particularly, the command generating unit 531 generates a tag search instruction including a read instruction or a write instruction as an instruction related to an embodiment of the present invention.

Specifically, the command generating unit 531 obtains the read area information and the write area information from the memory unit 120 in response to a request from the application unit 132. In the above description, the read area information and write area information is stored on the memory unit 120, but the read area information and write area information may be input by a user in timing of transmitting a tag search command to the reader/writer 600.

After obtaining the read area information and write area information, the command generating unit 531 generates response control information. The response control information mentioned here is identification information uniquely identifying a tag search instruction, which is the information that is determined uniquely, like a time stamp, every time a tag search instruction is generated. The command generating unit 531 thus generates a tag search instruction using the above read area information, write area information, and response control information.

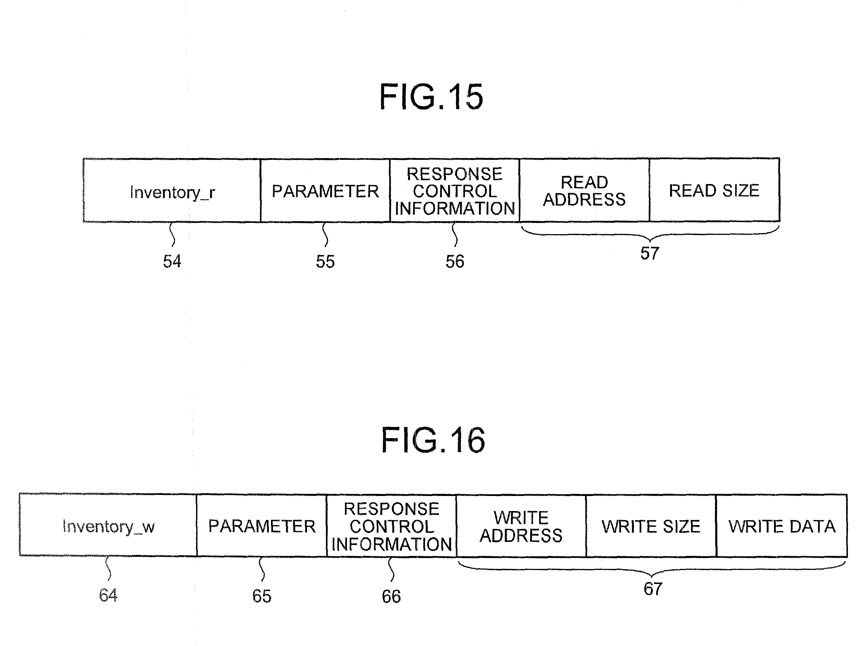

A tag search instruction generated by the command generating unit 531 is described here using Figs. 15 and 16. Fig. 15 depicts an example of a tag search instruction including a read instruction of the second embodiment. As shown in Fig. 15, this tag search instruction includes a control command (Inventory_r) 54 indicating that the tag search instruction includes a read instruction, a given parameter 55, response control information 56, and read instruction information 57.

The given parameter 55 is a parameter containing given control information necessary for communication, such as an error detection code (CRC). The read instruction information 57 is the information that is necessary when the RFID tag 700 reads out data from its memory area, and includes the read size of data to read and a read address indicating the memory area of the RFID tag 700 used as the read address of the data.

Fig. 16 depicts an example of a tag search instruction including a write instruction of the second embodiment. As shown in Fig. 16, this tag search instruction includes a control command (Inventory_w) 64 indicating that the tag search instruction includes a write instruction, a given parameter 65, response control information 66, and write instruction information 67.

The given parameter 65 is a parameter similar to the given parameter 55 of the Fig. 15. The write instruction information 67 is the information that is necessary when the RFID tag 700 writes data on the memory area, and includes the write size of data to write, a write address indicating the memory area of the RFID tag 700 used as the write address of the data, and the write data to write.

Turning to Fig. 14, the application unit 132 is a processing unit that executes various transactions and that transmits a tag search instruction generated by the command generating unit 531 to the reader/writer 600.

Specifically, the application unit 132 executes various transactions, and requests the command generating unit 531 to generate a tag search command in given timing arising during execution of the transactions.

The given timing mentioned here is determined according to the kind of a transaction. For example, in a supermarket, etc., a charge is adjusted by reading product price information from an RFID tag attached to a product in a cart when the cart passes through a prescribed position near a cash register. In such a charge adjustment system, the giving timing means the timing of detection of the cart by a position sensor, etc., installed in a given place.

In another case, information on commodities is read out from or written in onto RFID tags attached to commodities placed in a warehouse, etc., according to an instruction from a user. In such a commodity management. system, the given timing means the timing of issue of the instruction by the user.

When the command generating unit 531 generates a search command, the application unit 132 transmits the generated search command to the reader/writer 600 via the NW interface 110.

When a data processing result, such as read data and a write result, is transmitted from the reader/writer 600 as a response to the transmitted search command, the application unit 132 obtains the incoming data processing result via the NW interface 110, and executes various transactions using the obtained data processing result.

The configuration of the reader/writer 600 will then be described. The reader/writer 600 has the antenna 210, the radio transmission interface 220, the NW interface 230, the memory unit 240, and the control unit 250.

The radio transmission interface 220 is a processing unit that carries out radio communication with the RFID tag 700 by transmitting and receiving radio waves via the antenna 210. For example, the radio transmission interface 220 transmits a read command or a write command to the RFID tag 700 through radio waves, and receives a data processing result, such as read data and a write result, from the RFID tag 700, which data processing result is transmitted as a response to the read command or the write command.

The NW interface 230 is a processing unit that controls transmission/reception of data exchanged between the host computer 500 and the reader/writer 600 via the network 400. For example, the Network interface 230 receives a tag search instruction from the host computer 500, and transmits a data processing result, such as read data and a write result, to the host computer 500, which data processing result is transmitted as a response to the tag search instruction.

The memory unit 240 is a nonvolatile memory that has stored thereon various data and programs. Particularly, the memory unit 240 has stored thereon such data related to the present invention as a received tag ID from the RFID tag 700 and a data processing result (read data and a write result).

The control unit 250 has an internal memory that has stored thereon a control program for overall control over the reader/writer 600 and necessary data. The control unit 250 is a processing unit that executes various processes using these program and data. Particularly, in terms of functional conception, the control unit 250 is provided with the tag search processing unit 251 and a read/write processing unit 652 that are related to embodiments of the present invention.

The tag search processing unit 251 is a processing unit that transmits a tag search command to the RFID tag 700 when receiving a tag search instruction from the host computer 500. The tag search command mentioned here is a command that requests the RFID tag 700 to transmit a tag ID.

Specifically, when the tag search processing unit 251 receives a search instruction including response control information and a read instruction or a write instruction from the host computer 500 via the NW interface 230, the tag search processing unit 251 generates a tag search command including a command indicating a response condition ("GROUP_SELECT_NE command") and response control information and transmits the generated tag search command to RFID tags 700 present within the contact range via the radio transmission interface 220.

Upon receiving a response to the tag search command from the RFID tag 700 via the radio transmission interface 220, the tag search processing unit 251 determines that tag responses are colliding with each other when the receives response is not the response from one RFID tag 700 (hereinafter "one-tag response"), in which case the tag search processing unit 251 generates a FAIL command to transmit it to RFID tags 700 present within the contact range.

When the received response is the one-tag response, on the other hand, the tag search processing unit 251 stores the read instruction information 57 (including a read address and a read size) of the tag search instruction in a readout area defined in a given place in the internal memory, and stores the write instruction information 67 (including a write address, a write size, and write data) of the tag search instruction in a write-in area defined in a given place in the internal memory.

The tag search processing unit 251 then instructs the read/write processing unit 652 to transmit a read command or a write command to the RFID tag 700 from which the one-tag response is transmitted to the tag search processing unit 251. The read command is a command requesting the RFID tag 700 to read out data, and the write command is a command requesting the RFID tag 300 to write data.

When the tag search processing unit 251 does not receive a response to the tag search command from the RFID tag 700 via the radio transmission interface 220 after the passage of a given time, the tag search processing unit 251 determines that the RFID tag 700 is making no response.

In such a case, the tag search processing unit 251 checks on whether no response of this time is the nth no response of consecutive no responses as the reader/writer 600 repeatedly transmits tag search commends. When no response of this time is not the nth no response of consecutive no responses, the tag search processing unit 251 generates a SUCCESS command to transmit it to RFID tags 700 present within the contact range.

When no response of this time is the nth no response of consecutive no responses, the tag search processing unit 251 determines that all RFID tags 700 present within the contact range has made responses, and generates an INITIALIZE command to transmit it to RFID tags 700 present within the contact range, and then transmits a tag ID and read data or a write result, which are stored on the memory unit 240, to the host computer 500.

The tag search processing unit 251 may add, for example, information indicating whether data reading or writing has been completed normally to each tag ID as information to be transmitted to the host computer. When data reading and writing is carried out on divided pieces of data, which case will be described later, the tag search processing unit 251 may transmit read data or a write result only when reading or writing of every divided piece of data is successful, or may transmit only the piece of divided data read successfully or the write result of a piece of divided data written successfully.

The read/write processing unit 652 is a processing unit that when receiving a tag ID that is a response to a tag search command transmitted from the tag search processing unit 251, transmits a read command or a write command to the RFID tag identified by the tag ID on the basis of a read instruction or a write instruction included in a tag search instruction transmitted from the host computer 500.

The operation of the read/write processing unit 652 will then be described specifically. The operation with regard to transmission of a read command will first be described, and the operation with regard to transmission of a write command will then be described. Here, the description will be made on a case where the maximum size of data that can meet a request by a read command is eight bytes, and the maximum size of data that can meet a request by a write command is four bytes.

The operation with regard to transmission of a read command will first be described. When given an instruction of transmission of a read command, the read/write processing unit 652 checks a read size stored in the readout area, and, when the read size is larger than eight bytes, sets the read size on the read command.

The read/write processing unit 652 then backwardly shift a read address stored in the readout area by eight bytes, and subtracts eight bytes from the read size stored in the readout area. As result of the read size shift, the address of the data portion starting from the ninth byte to follow, for which data portion a read command is not transmitted yet, is set on the next command to transmit.

To indicate that a part of read data, which has not been set on the read command, remains to be set, the read/write processing unit 652 then turns on an area division flag, and sets the frequency of failure to zero, which frequency of failure is used for controlling retry transmission of the read command.

When the read size stored in the readout area is equal to or smaller than eight bytes, the read/write processing unit 652 sets the read address stored in the readout area on the read command, and, to indicate that the whole of the read data has been set on the read command, turns off the area division flag and sets the frequency of failure to zero.

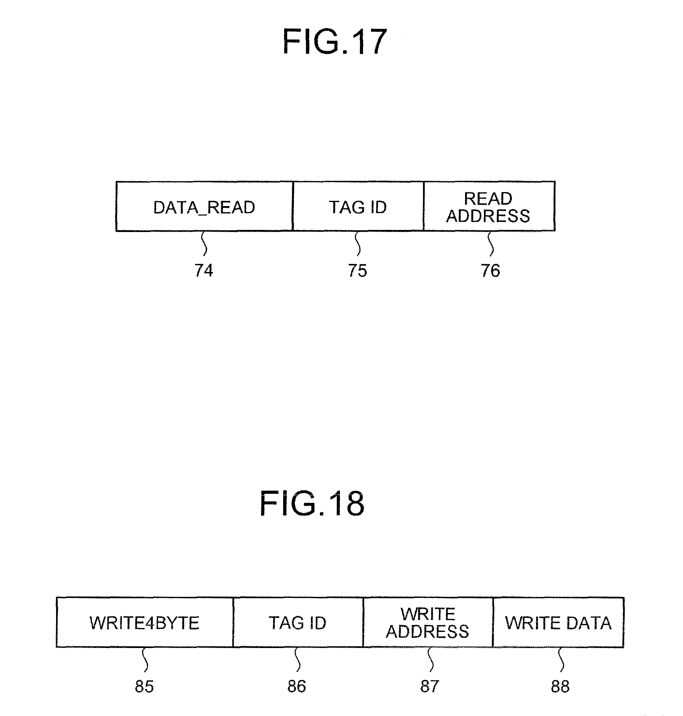

A read command generated by the read/write processing unit 652 is described here referring to Fig. 17. Fig. 17 depicts an example of a read command of the second embodiment. As shown in Fig. 17, the read command includes an access command (DATA_READ) 74 indicating that the command including the access command 74 is a read command, a tag ID 75, and a read address 76.

After setting a read address on a read command in the above manner, the read/write processing unit 652 specifies a tag ID received as the one-tag response, and transmits the read command. As a result, 8 byte data having a head address equivalent to the read address set on the read command is read at the RFID tag 700 identified by the tag ID.

When receiving read data transmitted from the RFID tag 700 as a response to the read command, the read/write processing unit 652 transmits a write-in command on response control information, which information is included in a tag search instruction transmitted from the host computer 500, to the RFID tag 700 that has transmitted the read data. The response control information transmitted to the RFID tag 700 is used at the RFID tag 700 for determining on whether or not to make a response to a tag search command.

The read/write processing unit 652 then links the received read data to the tag ID, stores the linked read data and tag ID on the memory unit 240, and then checks on whether the area division flag is on.

When the area division flag is not on, or a read size stored in the readout area is zero even if the area division flag is on, the read/write processing unit 652 determines that the whole of the read data that is the subject of a read instruction transmitted from the host computer 500 has been read, and generates a SUCCESS command to transmits it to RFID tags 700 present within the contact range.

When the area division flag is on and the read size stored in the readout area is not zero, the read/write processing unit 652 determines that the whole of the read data that is the subject of the read instruction transmitted from the host computer 500 has not been read yet. To read the rest of the data to follow, the read/write processing unit 652 then sets the information stored in the readout area on a read command, specifies again a tag ID received as the one-tag response, and transmits the read command.

When the read/write processing unit 652 fails to receive read data from the RFID tag 700 as a response to a read command even after the passage of a given time, the read/write processing unit 652 adds 1 to the frequency of failure. When the frequency of failure is fewer than M (e.g., 2), the read/write processing unit 652 retries transmission of the read command. When the frequency of failure is equal to or more than M, the read/write processing unit 652 generates a SUCCESS command to transmit it to RFID tags 700 present within the contact range.

The operation with regard to transmission of a write command will then be described. When given an instruction of transmission of a write command, the read/write processing unit 652 transmits a read command (DATA_READ command), on which a received response tag ID, a given read address, and a given read size are set. This read command puts the RFID tag 700 identified by the tag ID into "DATA_EXCHANGE state".

The description is made here about a case where the read command (DATA_READ command) is transmitted to the RFID tag 700 before data writing on the RFID tag 700. If the specification of radio communication makes this procedure is unnecessary, however, transmission of the read command may be omitted.

Subsequently, receiving read data transmitted from the RFID tag 700 as a response to the DATA_READ command, the read/write processing unit 652 transmits a response control information write-in command to the RFID tag 700 that has transmitted the read data.

The read/write processing unit 652 also checks a write size stored in the write-in area, and, when the write size is larger than four bytes, sets the write address and the head four bytes of write data, which are stored in the write-in area, on a write command. In addition, the read/write processing unit 652 stores the rest of write data staring from the fifth byte to follow, which has not been set on the write command, in a remaining data area defined in a given area in the internal memory.

The read/write processing unit 652 then backwardly shifts the write address stored in the write-in area by four bytes, and subtracts four bytes from the write size also stored in the write-in area. As a result of the write address shift, the data starting from the fifth byte to follow, for which data a write command is not transmitted yet, is set on the next command to transmit.

To indicate that a part of write data, which has not been set on the write command, remains to be set, the read/write processing unit 652 then turns on the area division flag, and sets the frequency of failure to zero, which frequency of failure is used for controlling retry transmission of the write command.

When the write size stored in the write-in area is equal to or smaller than four bytes, the read/write processing unit 652 sets the write address and the write data, which are stored in the write-in area, on the write command, and, to indicate that the whole of the write data has been set on the write command, turns off the area division flag and sets the frequency of failure to zero.

A write command generated by the read/write processing unit 652 is described here referring to Fig. 18. Fig. 18 depicts an example of a write command of the second embodiment. As shown in Fig. 18, the read command includes an access command (WRITE4BYTE) 85 indicating that the command including the access command 85 is a write command, a tag ID 86, a write address 87, and write data 88.

After setting a write address and write data on a write command in the above manner, the read/write processing unit 652 specifies a tag ID received as the one-tag response, and transmits the write command. As a result, 4 byte data having a head address equivalent to the write address set on the write command is written at the RFID tag 700 identified by the tag ID.

When receiving a write result transmitted from the RFID tag 700 as a response to the write command, the read/write processing unit 652 links the response write result to the tag ID and stores the linked write result and tag ID on the memory unit 240, and then checks on whether the area division flag is on.

When the area division flag is not on, or a write size stored in the readout area is zero even if the area division flag is on, the read/write processing unit 652 determines that the whole of the write data that is the subject of a write instruction transmitted from the host computer 500 has been written, and generates a SUCCESS command to transmits it to RFID tags 700 present within the contact range.

The read/write processing unit 652 may retry data reading from the RFID tag 700 that has transmitted a write result not ensuring success in data writing as a response to the write command, confirm success in data writing, and then transmit a SUCCESS command.

When the area division flag is on and the write size stored in the readout area is not zero, the read/write processing unit 652 determines that the whole of the write data that is the subject of a write instruction transmitted from the host computer 500 has not been written yet. To write the rest of the data to follow, the read/write processing unit 652 then sets the rest of the data stored in the remaining data area as write data in the write-in area, and then sets the information in the write-in area on a write command, specifies again a tag ID received as the one-tag response, and transmits the write command.

When the read/write processing unit 652 fails to receive a write result from the RFID tag 700 as a response to a write command even after the passage of a given time, the read/write processing unit 652 adds 1 to the frequency of failure. When the frequency of failure is fewer than M (e.g., 2), the read/write processing unit 652 retries transmission of the write command. When the frequency of failure is equal to or more than M, the read/write processing unit 652 generates a SUCCESS command to transmit it to RFID tags 700 present within the contact range.

The configuration of the RFID tag 700 will then be described. The RFID tag 700 has the antenna 310, the radio transmission interface 320, the rectifying unit 330, a memory unit 740, and the control unit 350.

The radio transmission interface 320 is a processing unit that carries out radio communication with the reader/writer 600 by transmitting and receiving radio waves via the antenna 310. For example, the radio transmission interface 320 receives a read command or a write command from the reader/writer 600 through radio waves, and transmits a data processing result, such as read data and a write result, to the reader/writer 600, which data processing result is transmitted as a response to the read command or the write command.

The rectifying unit 330 is a processing unit that rectifies a received radio wave from the reader/writer 600 to generate electric power, and supplies the generated electric current to the memory unit 740 and the control unit 350.

The memory unit 740 is a nonvolatile memory that has stored thereon various data, etc. Particularly, the memory unit 740 has stored thereon such data related to the present invention as a tag ID, various data on transactions executed by the host computer 500, and response control information transmitted from the reader/writer 600.

The control unit 350 is a processing unit that carries out overall control over the RFID tag 700. Particularly, in terms of functional conception, the control unit 750 is provided with a response control unit 751 and the data processing unit 352 that are related to the present invention.

The response control unit 751 is a processing unit that controls transmission of a tag ID and data reading or writing on the memory unit 740 on the basis of various commands transmitted from the reader/writer 600.

Specifically, when receiving a tag search command transmitted from the reader/writer 600 via the radio transmission interface 320, the response control unit 751 compares response control information included in the tag search command with response control information stored on the memory unit 740. When both pieces of response control information are identical, the response control unit 751 determines that a response has been made to the tag search command, and waits for transmission of the next search command.

When both pieces of response control information are different from each other, the response control unit 751 carries out the collision arbitration process, and transmits a tag ID to the reader/writer 600 according to a result of the collision arbitration process. The collision arbitration process mentioned here is the process of preventing such an accident that the reader/writer becomes incapable of communication as response tag IDs from a plurality of RFID tags 700 are transmitted simultaneously to the reader/writer. The collision arbitration process is also called the anticollision process. A variety of techniques have been suggested as such a collision arbitration process, and which technique to use is not specified here.

For example, one of available methods is to generate random numbers in timing of reception of a tag search command and determine on whether or not to make a response to the reader/writer according to whether an obtained random number satisfies a given numerical condition.

When receiving a command transmitted from the reader/writer 600 via the radio transmission interface 320, the response control unit 751 checks the type of the received command. When the received command is a read command (DATA_READ command), the RFID tag 700 becomes "DATA_EXCHANGE state".

This "DATA_EXCHANGE state" represents the state of the RFID tag 700 that the RFID tag 700 is ready for data transmission/reception. When the RFID tag 700 becomes this state, the response control unit 751 does not transmit a tag ID in response to a tag search command transmitted from the reader/writer 600.

In this case, the response control unit 751 controls the data processing unit 352 to read out data a from the memory unit 740 on the basis of a read address included in the read command, and transmits the read out data to the reader/writer 600 via the radio transmission interface 320.

The response control unit 751 transmits a tag ID again when the received command is a SUCCESS command, carries out the collision arbitration process again when the received command is a FAIL command, and initializes various setting of the RFID tag 700 to wait for reception of the next search command when the received command is an INITIALIZE command.

Subsequently, when receiving response control information from the reader/writer 600 via the radio transmission interface 320, the response control unit 751 writes the received response control information on the memory unit 740. The response control information stored on the memory unit 740 is compared with response control information included in the next tag search command when the next tag search command is received, and is used for determining on whether or not to make a response to the received tag search command.

When receiving another command transmitted from the reader/writer 600 via the radio transmission interface 320, the response control unit 751 checks the type of the received command. When the received command is a read command, the response control unit 751 reads out data from the memory unit 740 on the basis of a read address included in the read command, and transmits the read out data to the reader/writer 600 via the radio transmission interface 320.

When the received command is a write command, the response control unit 751 writes data on the memory unit 740 on the basis of a write address and write data included in the write command, and transmits a write result to the reader/writer 600.

The response control unit 751 waits for reception of the next command when the received command is a SUCCESS command, and initializes various setting of the RFID tag 700 to wait for reception of the next search command when the received command is an INITIALIZE command.

The data processing unit 352 is a processing unit that carries out data reading or writing on the memory unit 740 on the basis of an instruction from the response control unit 751. The data processing unit 352 sends read out data to the response control unit 751 as read data when carrying out data reading, and sends information indicating whether writing has been completed correctly to the response control unit 751 as a write result when carrying out data writing.

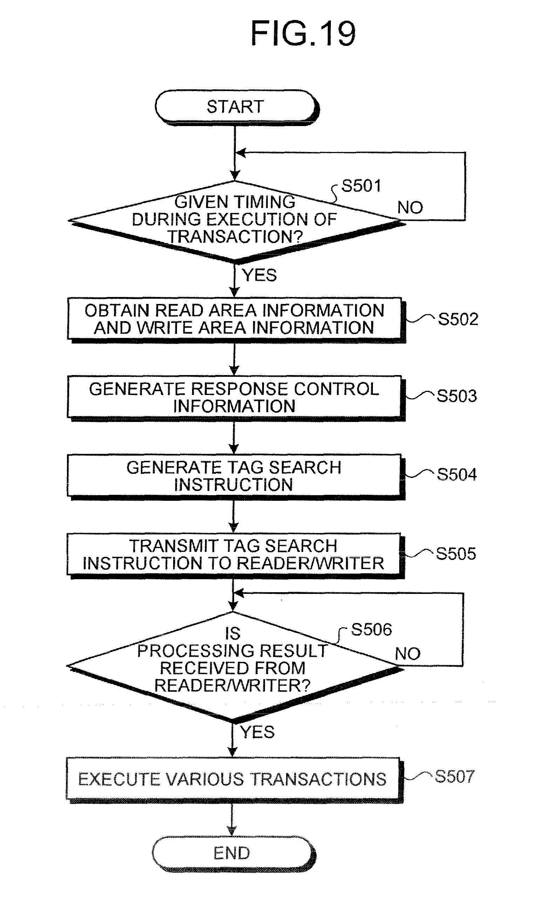

Procedures of the host computer 500, the reader/writer 600, and the RFID tag 700 of the second embodiment will then be described referring to Figs. 19 to 24. With respect to the procedure of the reader/writer 600, a data read process carried out upon reading data from the RFID tag 700 and a data write process carried out upon writing data on the RFID tag 700 will be described. In the following description, the read command as described above will be called "DATA_READ command", and the write command as described above will be called "WRITE4BYTE command". Commands used for data reading/writing in the present invention, however, are not limited to these commands.

First, the procedure of the host computer 500 of the second embodiment will be described. Fig. 19 is a flowchart of the procedure of the host computer 500 of the second embodiment. As shown in Fig. 19, when the application unit 132 detects given timing that arises during execution of transactions (Yes at step S501), the host computer 500 requests the command generating unit 531 to generate a tag search instruction.

Responding to the request from the application unit 132, the command generating unit 531 obtains read area information and write area information stored on the memory unit 120 (step S502), and generates response control information (step S503).

The command generating unit 531 then generates a tag search instruction on the basis of the read area information and write area information obtained from the memory unit 120 and the response control information (step S504). When the command generating unit 531 generates the tag search instruction, the application unit 132 transmits the generated tag search instruction to the reader/writer 600 (step S505).

Subsequently, when the NW interface 110 receives a data processing result, such as a tag ID, read data, and a write result, from the reader/writer 600, the data processing result being received as a response to the tag search instruction (Yes at step S506), the application unit 132 executes various transactions using the data processing result (step S507).

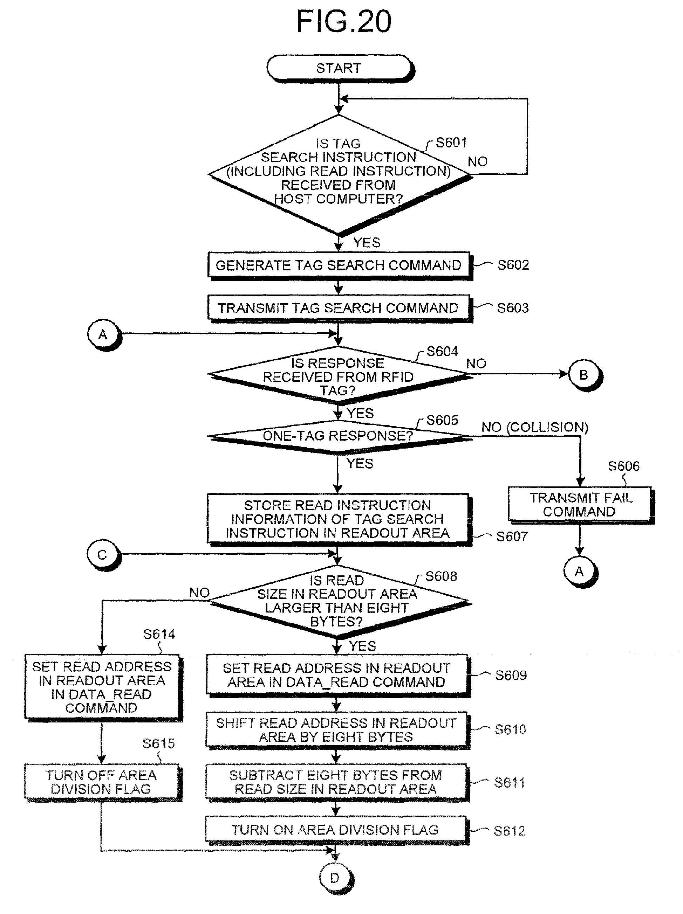

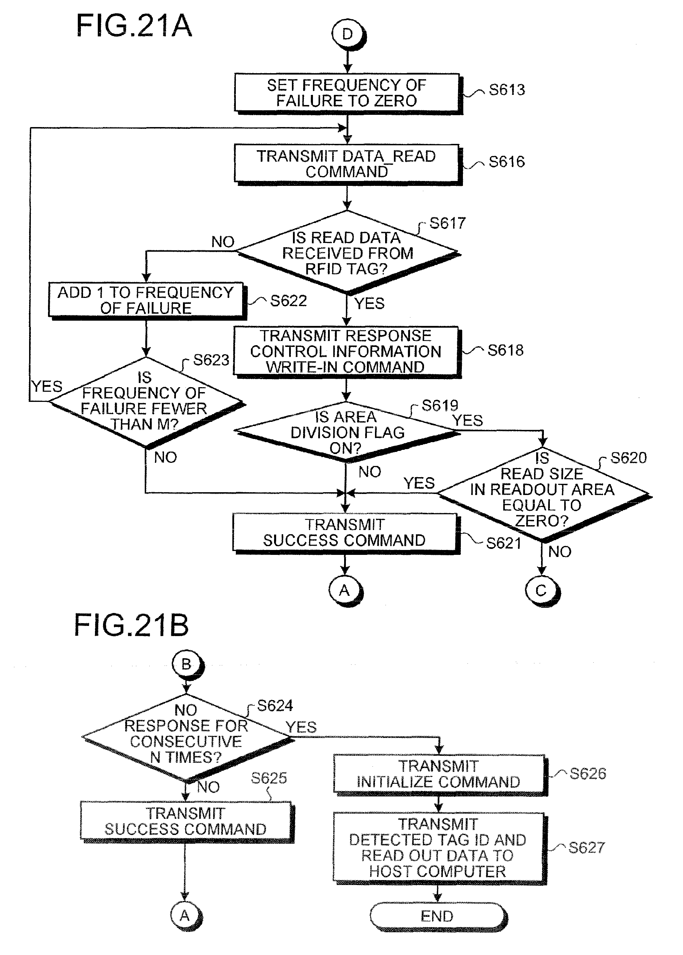

The procedure of the data read process by the reader/writer 600 of the second embodiment will then be described. Figs. 20 and 21 are flowcharts (1) and (2) of the procedure of the data read process by the reader/writer 600 of the second embodiment. As shown in Figs. 20 and 21, when the reader/writer 600 receives a tag search instruction including a read instruction from the host computer 500 (Yes at step S601), the tag search processing unit 251 generates a tag search command including a command indicating a response condition ("GROUP_SELECT_NE command") and response control information (step S602), and transmits the generated tag search command to RFID tags 700 present within the contact range of the antenna 210 via the radio transmission interface 220 (step S603).

Upon receiving a response to the tag search command from the RFID tag 700 via the radio transmission interface 220 (Yes at step S604), the tag search processing unit 251 determines that tag responses are colliding with each other when the received response is not the one-tag response (No at step S605). The tag search processing unit 251 then generates a FAIL command to transmit it to RFID tags 700 present within the contact range (step S606), and then returns to step S604 to continue processes to follow.

When the received response is the one-tag response (Yes at step S605), on the other hand, the tag search processing unit 251 stores the read instruction information 57 (including a read address and a read size) of the tag search instruction in the readout area defined in the given place on the internal memory (step S607), and then instructs the read/write processing unit 652 to transmit a read command.

The read/write processing unit 652 instructed to transmit the read command checks a read size stored in the readout area, and, when the read size is larger than eight bytes (Yes at step S608), sets a read address stored in the readout area on the DATA_READ command (step S609).

Through this DATA_READ command, 8 bytes data having a head address equivalent to the read address set on the DATA_READ command is read out from the RFID tag 700. The read/write processing unit 652 then shifts the read address stored in the readout area by eight bytes (step S610), and subtracts eight bytes from the read size stored in the readout area (step S611.).

To indicate that a part of read data, which has not been set on the DATA_READ command, remains to be set, the read/write processing unit 652 turns on the area division flag (step S612), and then sets the frequency of failure to zero, which frequency of failure is used for controlling retry transmission of a DATA_READ command (step S613).

When the read size stored in the readout area is equal to or smaller than eight bytes (No at step S608), the read/write processing unit 652 sets the read address stored in the readout area on the DATA_READ command (step S614). To indicate that the whole of the read data has been set on the DATA_READ command, the read/write processing unit 652 turns off the area division flag (step S615) and then sets the frequency of failure to zero (step S613).

After setting the read address on the DATA_READ command in this manner, the read/write processing unit 652 specifies a tag ID received as the one-tag response, and transmits the DATA_READ command (step S616).

When receiving read data transmitted from the RFID tag 700 as a response to the DATA_READ command (Yes at step S617), the read/write processing unit 652 transmits a response control information write-in command to the RFID tag 700 that has transmitted the read data (step S618).

The read/write processing unit 652 then links the response read data to the tag ID and stores the linked read data and tag ID on the memory unit 240, and then checks on whether the area division flag is on.

When the area division flag is not on (No at step S619), or the read size stored in the readout area is zero (Yes at step S620) even if the area division flag is on (Yes at step S619), the read/write processing unit 652 determines that the whole of the read data that is the subject of the read instruction transmitted from the host computer 500 has been read, and generates a SUCCESS command to transmits it to RFID tags 700 present within the contact range (step S621).

When the area division flag is on (Yes at step S619) and the read size stored in the readout area is not zero (No at step S620), the read/write processing unit 652 determines that the whole of the read data that is the subject of the read instruction transmitted from the host computer 500 has not been read yet, and returns to step S608 to continue processes to follow.

When the read/write processing unit 652 fails to receive read data from the RFID tag 700 as a response to the DATA_READ command even after the passage of the given time (No at step S617), the read/write processing unit 652 adds 1 to the frequency of failure (step S622).

When the frequency of failure is fewer than M (e.g., 2) (Yes at step S623), the read/write processing unit 652 returns to step S616, and retries transmission of the DATA_READ command. When the frequency of failure is equal to or more than M (No at step S623), the read/write processing unit 652 generates a SUCCESS command to transmit it to RFID tags 700 present within the contact range (step S621).

At step S604, when the radio transmission interface 220 does not receive the response to the tag search command from the RFID tag 700 even after the passage of the given time (No at step S604), the read/write processing unit 652 determines that the RFID tag 700 is making no response

When no response of this time is not the nth no response of consecutive no responses as the reader/writer 600 repeatedly transmits tag search commends (No at step S624), the tag search processing unit 251 generates a SUCCESS command to transmit it to RFID tags 700 present within the contact range (step S625), and then returns to step S604 to continue processes to follow.

When no response of this time is the nth no response of consecutive no responses (Yes at step S624), the tag search processing unit 251 determines that all RFID tags 700 present within the contact range have made responses. The tag search processing unit 251 then generates an INITIALIZE command to transmit it to RFID tags 700 present within the contact range (step S626), transmits the tag ID and read data stored on the memory unit 240 to the host computer 500 as the detected tag ID and read out data (step S627), and then ends the data read process.

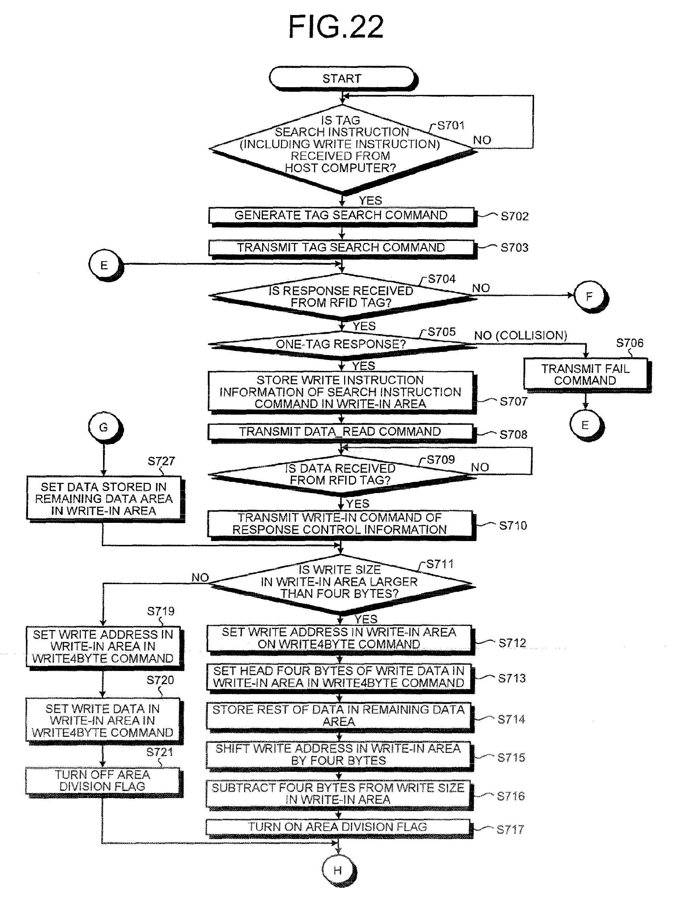

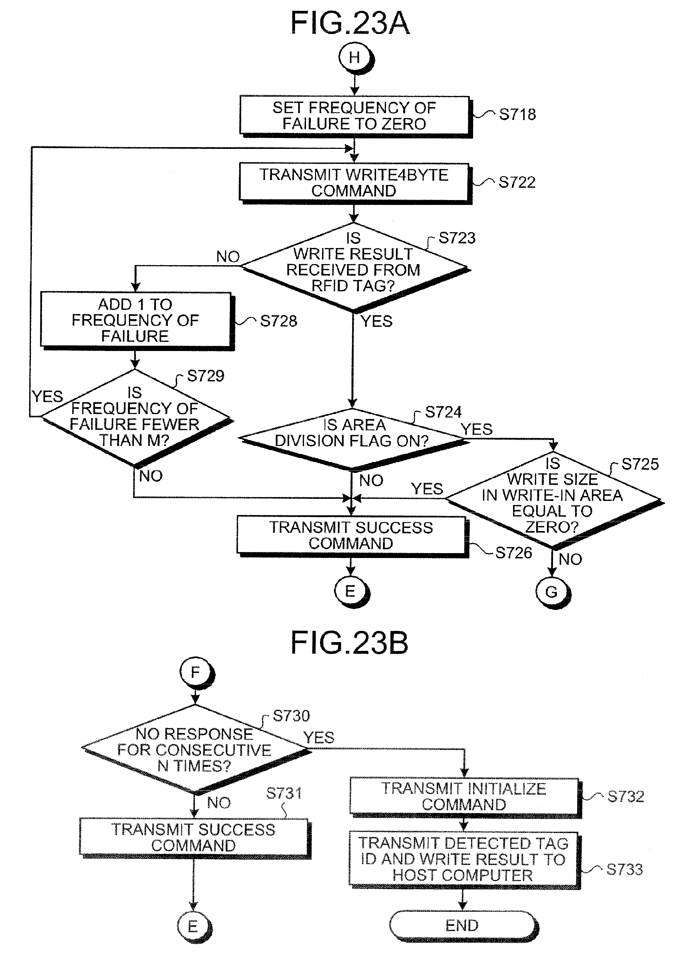

The procedure of the data write process by the reader/writer 600 of the second embodiment will then be described. Figs. 22 and 23 are flowcharts (1) and (2) of the procedure of the data write process by the reader/writer 600 of the second embodiment. As shown in Figs. 22 and 23, when the reader/writer 600 receives a search instruction including a write instruction from the host computer 500 (Yes at step S701), the reader/writer 600 generates a tag search command including a command indicating a response condition ("GROUP_SELECT_NE command") and response control information (step S702), and transmits the generated tag search command to RFID tags 700 present within the contact range of the antenna 210 (step S703).

When the radio transmission interface 220 receives a response to the tag search command from the RFID tag 700 (Yes at step S704), the read/write processing unit 652 determines that tag responses are colliding with each other when the received response is not the one-tag response (No at step S705), and generates a FAIL command to transmit it to RFID tags 700 present within the contact range (step S706), and then returns to step S704 to continue processes to follow.

When the received response is the one-tag response (Yes at step S705), on the other hand, the tag search processing unit 251 stores the write instruction information 67 (including a write address, a write size, and write data) of the tag search instruction in the write-in area defined in the given place on the internal memory (step S707), and then instructs the read/write processing unit 652 to transmit a write command.

The read/write processing unit 652 instructed to transmit the write command transmits a DATA_READ command, on which a response tag ID, a given read address, and a given read size are set (step S708). This puts the RFID tag identified by the tag ID into "DATA_EXCHANGE state".

Subsequently, receiving read data transmitted from the RFID tag 700 as a response to the DATA_READ command (Yes at step S709), the read/write processing unit 652 specifies the same tag ID set on the DATA_READ command, and transmits a response control information write-in command (step S710). As a result, the RFID tag 700 identified by this tag ID is recognized as the RFID tag that has already made a response to the tag search command.

When a write size stored in the write-in area is larger than four bytes (Yes at step S711), the read/write processing unit 652 sets the write address and the head four bytes of write data, which are stored in the write-in area, on a WRITE4BYTE command (steps S712 and S713). The read/write processing unit 652 then stores the rest of write data staring from the fifth byte to follow in the remaining data area defined in the given area on the internal memory (step S714).

The read/write processing unit 652 then shifts the write address stored in the write-in area by four bytes (step S715), and subtracts four bytes from the write size stored in the write-in area (step S716).

To indicate that a part of the write data, which has not been set on the WRITE4BYTE, remains to be set, the read/write processing unit 652 turns on the area division flag (step S717), and then sets the frequency of failure to zero (step S718), which frequency of failure is used for controlling retry transmission of the WRITE4BYTE command.

When the write size stored in the write-in area is equal to or smaller than four bytes (No at step S711), the read/write processing unit 652 sets the write address and the write data, which are stored in the write-in area, on the WRITE4BYTE command (steps S719 and S720), and, to indicate that the whole of the write data has been set on the WRITE4BYTE command, turns off the area division flag (step S721) and then sets the frequency of failure to zero (step S718).

After setting the write address on the WRITE4BYTE command in this manner, the read/write processing unit 652 specifies a tag ID received as the one-tag response, and transmits the WRITE4BYTE command (step S722).

When receiving a write result transmitted from the RFID tag 700 as a response to the WRITE4BYTE command (Yes at step S723), the read/write processing unit 652 links the response write result to the tag ID and stores the linked write result and tag ID on the memory unit 240, and then checks on whether the area division flag is on.

When the area division flag is not on (No at step S724), or the write size stored in the write-in area is zero (Yes at step S725) even if the area division flag is on (Yes at step S724), the read/write processing unit 652 determines that the whole of the write data that is the subject of the write instruction transmitted from the host computer 500 has been read, and generates a SUCCESS command to transmits it to RFID tags 700 present within the contact range (step S726).

When the area division flag is on (Yes at step S724) and the write size stored in the write-in area is not zero (No at step S725), the read/write processing unit 652 determines that the whole of the write data that is the subject of the write instruction transmitted from the host computer 500 has not been written yet, and sets the data stored in the remaining data area in the write-in area (step S727), and then returns to step S711 to continue processes to follow.

When the read/write processing unit 652 fails to receive a write result from the RFID tag 700 as a response to the WRITE4BYTE command even after the passage of the given time (No at step S723), the read/write processing unit 652 adds 1 to the frequency of failure (step S728).

When the frequency of failure is fewer than M (e.g., 2) (Yes at step S729), the read/write processing unit 652 returns to step S722, and retries transmission of the WRITE4BYTE command. When the frequency of failure is equal to or more than M (No at step S729), the read/write processing unit 652 generates a SUCCESS command to transmit it to RFID tags 700 present within the contact range (step S726).

At step S704, when the radio transmission interface 220 does not receive the response to the tag search command from the RFID tag 700 even after the passage of the given time (No at step S704), the read/write processing unit 652 determines that the RFID tag 700 is making no response.

When no response of this time is not the nth no response of consecutive no responses as the reader/writer 600 repeatedly transmits tag search commends (No at step S730), the tag search processing unit 251 generates a SUCCESS command to transmit it to RFID tags 700 present within the contact range (step S731), and then returns to step S704 to continue processes to follow.

When no response of this time is the nth no response of consecutive no responses (Yes at step S730), the tag search processing unit 251 determines that all RFID tags 700 present within the contact range have made responses. The tag search processing unit 251 then generates an INITIALIZE command to transmit it to RFID tags 700 present within the contact range (step S732), transmits the tag ID and write data stored on the memory unit 240 to the host computer 500 as the detected tag ID and write result (step S733), and then ends the data write process.

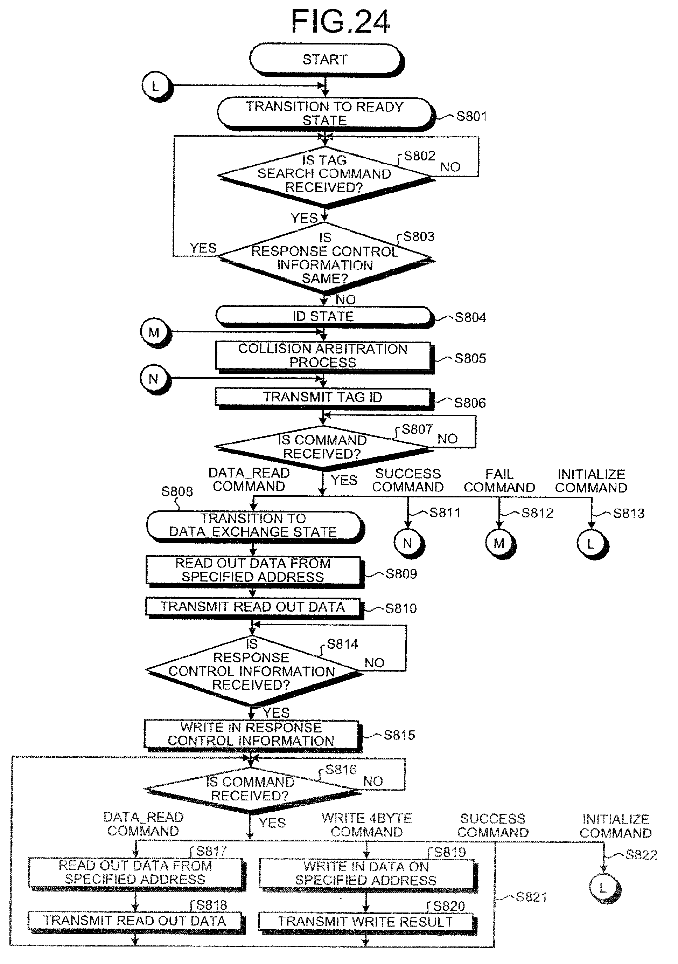

The procedure of the RFID tag 700 of the second embodiment will then be described. Fig. 24 is a flowchart of the procedure of the RFID tag 700 of the second embodiment. At the RFID tag 700, when the antenna 310 receives radio waves transmitted from the reader/writer 600, the rectifying unit 330 rectifies the radio waves to generate power and supplies the generated power to the control unit 350 and the memory unit 740, as shown in Fig. 24. This puts the RFID tag 700 into "READY state" (step S801).

When the response control unit 751 receives a search command including a command indicating a response condition ("GROUP_SELECT_NE command") and response control information transmitted from the reader/writer 600 via the radio transmission interface 320 (Yes at step S802), the response control unit 751 compares response control information included in the search command with response control information stored on the memory unit 740, and, when both pieces of response control information are identical (Yes at step S803), determines that a response to the search command has been already made, in which case the response control unit 751 does not carries out processes to follow and returns to step S802 to wait for the next search command to receive.

When both pieces of response control information are different from each other (No at step S803), on the other hand, the RFID tag 700 becomes "ID state" (step S804), in which case the response control unit 751 executes the collision arbitration process (step S805), and transmits a tag ID to the reader/writer 600 according to a result of the collision arbitration process (step S806).

Then, when receiving a command transmitted from the reader/writer 600 via the radio transmission interface 320 (Yes at step S807), the response control unit 751 checks the type of the received command.

When the received command is a DATA_READ command, the RFID tag 700 becomes "DATA_EXCHANGE state" (step S808), in which state the data processing unit 352 under control by the response control unit 751 reads out data from the memory unit 740 on the basis of a read address included in the DATA_READ command (step S809), and transmits the read out data to the reader/writer 600 via the radio transmission interface 320 (step S810).

When the received command is a SUCCESS command (step S811), the response control unit 751 returns to step S806, retransmits the tag ID, and continues processes to follow. When the received command is a FAIL command (step S812), the response control unit 751 returns to step S805, carries out the collision arbitration process again, and continues processes to follow. When the received command is an INITIALIZE command (step S813), the response control unit 751 returns to step S801, initializes various setting of the RFID tag 700 to wait for reception of the next search command.

Subsequently, when receiving response control information transmitted, from the reader/writer 600 via the radio transmission interface 320 (Yes at step S814), the response control unit 751 writes the received response control information on the memory unit 740 (step S815).

When receiving another command transmitted from the reader/writer 600 via the radio transmission interface 320 (Yes at step S816), the response control unit 751 checks the type of the received command. When the received command is a DATA_READ command, the response control unit 751 reads out data from a specified address on the memory unit 740 on the basis of a read address included in the DATA_READ command (step S817), and transmits the read out data to the reader/writer 600 via the radio transmission interface 320 (step S818).

When the received command is a WRITE4BYTE command, the response control unit 751 writes data on a specified address on the memory unit 740 on the basis of a write address and write data included in the WRITE4BYTE command (step S819), and transmits a write result to the reader/writer 600 (step S820).

When the received command is a SUCCESS command (step S821), the response control unit 751 returns to step S816 and waits for reception of the next command. When the received command is an INITIALIZE command (step S822), the response control unit 751 returns to step S801, initializes various setting of the RFID tag 700, and waits for reception of the next search command.

the second embodiment as described above, at the host computer 500, the command generating unit 531 generates a tag search instruction including a read instruction or a write instruction, and the application unit 132 transmits the generated tag search instruction to the reader/writer 600. At the reader/writer 600, the tag search processing unit 251, when receiving the tag search instruction from the host computer 500, transmits a tag search command requesting transmission of a tag ID uniquely identifying the RFID tag 700, and the read/write processing unit 652, when receiving a tag ID transmitted from the RFID tag 700 as a response to the tag search command, transmits a data read command or a data write command to the RFID tag 700 identified by the tag ID on the basis of the read instruction or the write instruction included in the tag search command.

As a result, read instructions or write instructions, which are conventionally transmitted one by one from the host computer 500 for each RFID tag 700, can be transmitted all together at once through one tag search instruction. This reduces an amount of data exchanged between the host computer 500 and the reader/writer 600, and also reduces overhead occurring in communication between the host computer 500 and the reader/writer 600 when data reading and/or writing is carried out on the RFID tag 700.

In the second embodiment, a tag search instruction transmitted from the host computer 500 includes the read size or the write size of data to read or write. At the readere/writer 600, when the read size or the write size included in the tag search instruction exceeds the maximum size of data that can meet a request by a read command or a write command, the read/write processing unit 652 determines a size equal to or smaller than the maximum size to be the size of data that meets the request by the read command or the write command, and transmits read commands or write commands for a plurality of pieces of data divided for each determined size.

As a result, read instructions and/or write instructions can be transmitted all together even if data to read and/or write has a size exceeding the maximum size of data that can meet a request by a read command or write command. This further reduces overhead occurring in communication between the host computer 500 and the reader/writer 600 when data reading or writing is carried out on the RFID tag 700.

While the embodiments of the present invention have been described herein, the present invention may also be carried out in the form of various embodiments other than the embodiments as described above. Another embodiment included in the present invention will now be described as a third embodiment.

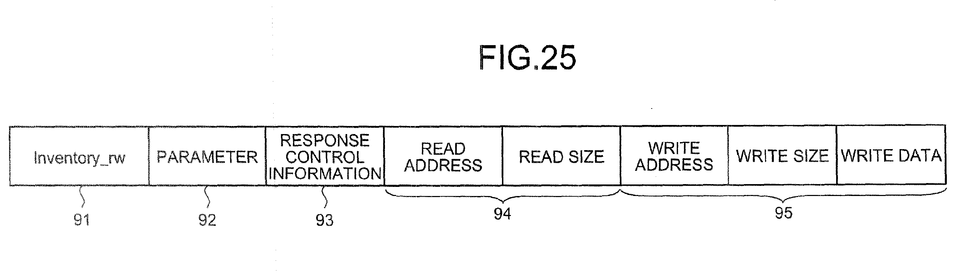

For example, in the above embodiments, the use of a tag search instruction including a read instruction and of a tag search instruction including a write instruction have been described separately, as shown in Figs. 4, 5, 15, and 16. A read instruction and a write instruction, however, may be included in one tag search instruction. Fig. 25 depicts an example of a tag search instruction including a read instruction and a write instruction. The following description will be made about a case where a read instruction and a write instruction are included in one tag search instruction in the second embodiment.

For example, as shown in Fig. 25, the command generating unit 531 of the host computer 500 generates a tag search instruction which includes a control command 91 (Inventory_rw) indicating that the tag search instruction includes both read instruction and write instruction, a given parameter 92, response control information 93, read instruction information 94, and write instruction information 95. The tag search processing unit 251 of the reader/writer 600, which receives the generated tag search instruction, stores the read instruction information 94 and the write instruction information 95 in a readout area and a write-in area, respectively, and then instructs the read/write processing unit 652 to transmit a read command and a write command.

As a result, read instructions and write instructions can be transmitted all together when data reading/writing on the RFID tag 700 is carried out simultaneously. This further reduces overhead occurring in communication between the host computer 500 and the reader/writer 600 when data reading or writing is carried out on the RFID tag 700.

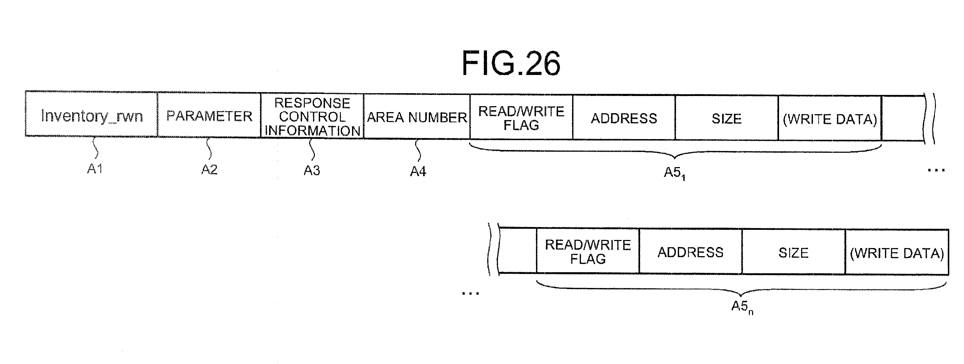

In another example, one piece of tag search instruction information may include a plurality of read instructions or write instructions. Fig. 26 depicts an example of a tag search instruction including a plurality of read instructions or write instructions. As shown in Fig. 26, this tag search instruction includes a control command A1 (Inventory_rwn) indicating that the tag search instruction includes a plurality of read instructions or write instructions, a given parameter A2, response control information A3, an area number A4, and access instruction information A5₁ to A5ₙ.

The area number A4 is the number of read instructions or write instructions set on the access instruction information A5₁ to A5ₙ. The access instruction information A5₁ to A5ₙ is an area used for setting n read instructions or write instructions, and each of the access instruction information A5₁ to A5ₙ includes a read/write flag, an address, a size, and write data. A binary value (e.g., "0" and "1") is set on the read/write flag, where the binary value indicates whether an access instruction set on each of the access instruction information A5₁ to A5ₙ is a read instruction or a write instruction. When the access instruction is the read instruction, a read address is set on the address, a read size is set on the size, and nothing is set on the write data. When the access instruction is the write instruction, on the other hand, a write address is set on the address, a write size is set on the size, and data to write is set on the write data.

For example, the command generating unit 531 of the host computer 500 generates such a tag search instruction including a plurality of read instructions or write instructions as shown in Fig. 26. The tag search processing unit 251 of the reader/writer 600, which receives the generated tag search instruction, obtains as many access instructions as the number set on the area number A4 sequentially from the access instruction information A5₁ to access instruction information A5ₙ. Then, for each obtained access instruction, the tag search processing unit 251 determines on whether the obtained access instruction is a read instruction or a write instruction on the basis of the read/write flag, and, based on a determination result, stores the reads instruction or the write instruction in the readout area or the write-in area, respectively. After that, the tag search processing unit 251 instructs the read/write processing unit 625 to transmit a read command or a write command.

As a result, read instructions or write instructions can be transmitted all together even in a case of reading each of a plurality of pieces of data stored on the discontinuous memory areas of the RFID tag 700 or of writing each of a plurality of pieces of data on the discontinuous memory areas of the RFID tag 700. This further reduces overhead occurring in communication between the host computer 500 and the reader/writer 600 when data reading or writing is carried out on the RFID tag 700.

While the reader/writer has been described in the above embodiments, a reader/writer control program having the same function as the reader/writer is provided by achieving the configuration of the reader/writer in the form of software. A computer executing this reader/writer control program will then be described.

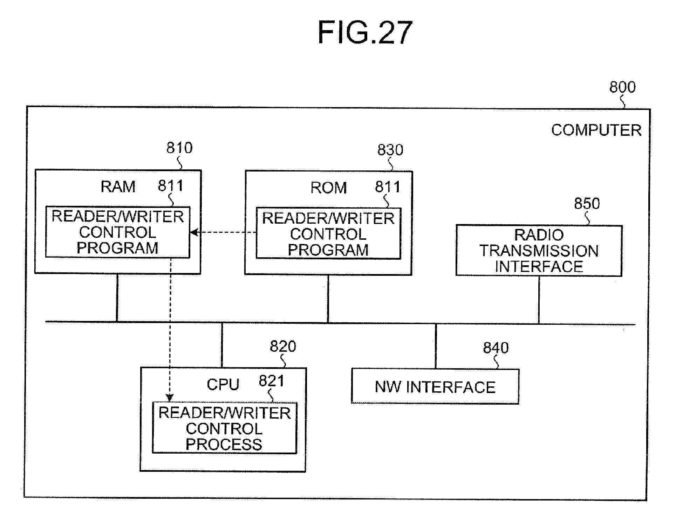

Fig. 27 is a functional block diagram of the configuration of the computer that executes the reader/writer control program. As shown in Fig. 27, this computer 800 includes a RAM (Random Access Memory) 810, a CPU (Central Processing Unit) 820, a ROM (Read Only Memory) 830, a NW interface 840, and a radio transmission interface 850.

The RAM 810 is a memory that has stored thereon a program, an interim result of execution of the program, etc. The CPU 820 is a central processing unit that reads out the program from the RAM 810 to execute the program. The ROM 830 is a nonvolatile memory that has stored thereon a program or data.

The NW interface 840 is an interface that connects the computer 800 to another computer via a network. The radio transmission interface 850 is an interface that carries out radio communication via an antenna.

A reader/writer control program 811, which is executed in the computer 800, is installed in advance in the ROM 830. In another case, the reader/writer control program 811 is stored on a data base, etc., of another computer system that is connected to the computer 800 via the NW interface 840, read out from the data base, etc., and is installed in the computer 800.

The reader/writer control program 811 installed in the computer 800 is stored on the ROM 830, read out onto the RAM 810, and is executed as a reader/writer control process 821 by the CPU 820.

Out of the processes described in the above embodiments, a part of or the whole of the processes that are described as automatically executable processes may be executed manually, or a part of or the whole of the processes that are described as manually executable processes may be executed automatically using a known method.

Besides, the procedures, control procedures, specific names, and information including various data and parameters as shown in the above text and drawings may be changed in any desired manner except a case where a specific note is given to prevent the change.

The constituent elements of the apparatuses shown above are presented in terms of functional conception, and do not necessarily have to be physically configured as shown in the drawings. This means that specific forms of distribution and/or integration of the apparatuses are not limited to the forms as shown in the drawings, and that the whole of or a part of the apparatus may be distributed and/or integrated functionally or physically in any desired unit according to various loads, service situations etc.

The whole of or any part of the process functions carried out in the apparatuses are achieved through a CPU and programs analyzed and executed by the CPU, or achieved in the form of hardware run by wired logic.

According to embodiments of the present invention, a host apparatus generates a tag search instruction including a read instruction and/or a write instruction and transmits the generated tag search instruction to a reader/writer apparatus. The reader/writer apparatus, when receiving the tag search instruction from the host apparatus, transmits a request for transmission of tag identification information uniquely identifying an RFID tag, and, when receiving the tag identification information transmitted from the RFID tag as a response to the transmitted request for transmission of the tag identification information, transmits a data read request and/or a data write request to the RFID tag identified by the tag identification information on the basis of the read instruction and/or the write instruction included in the tag search instruction. As a result, read instructions or write instructions, which are conventionally transmitted one by one from the host apparatus for each RFID tag, can be transmitted all together at once through one tag search instruction, which brings an effect of reduction in an amount of data exchanged between the host apparatus and the reader/writer apparatus and of a reduction in overhead occurring in communication between the host apparatus and the reader/writer apparatus when data reading and/or writing is carried out on the RFID tag.

According to embodiments of the present invention, a tag search instruction transmitted from the host apparatus includes the read size and/or the write size of data to read and/or write. When the read size and/or the write size included in the tag search instruction exceed the maximum size of data that can meet a read request and/or a write request, the reader/writer apparatus determines a size equal to or smaller than the maximum size to be the size of data that meets the read request and/or the write request, and transmits read requests and/or write requests for a plurality of divided pieces of data for each determined size. As a result, read instructions and/or write instructions can be transmitted all together even if data to read or write has a size exceeding the maximum size of data that can meet a read request or a write request, which brings an effect of further reduction in overhead occurring in communication between the host apparatus and the reader/writer apparatus when data reading and/or writing is carried out on the RFID tag.

According to embodiments of the present invention, a tag search instruction transmitted from the host apparatus includes a plurality of pieces of address information indicating memory areas of an RFID tag used as the read address and/or write address of data to read and/or write, and the reader/writer apparatus transmits a read request and/or a write request for each piece of address information included in the tag search instruction. As a result, read instructions and/or write instructions can be transmitted all together even when a plurality of pieces of data stored on the discontinuous memory areas of the RFID tag are read piece by piece or a plurality of pieces of data are written in piece by piece on the discontinuous memory areas of the RFID tag, which brings an effect of further reduction in overhead occurring in communication between the host device and the reader/writer when data reading and/or writing is carried out on the RFID tag.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

In any of the above aspects, the various features may be implemented in hardware, or as software modules running on one or more processors. Features of one aspect may be applied to any of the other aspects.

The invention also provides a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A reader/writer apparatus for reading/writing data from/to an RFID tag according to an instruction from a host apparatus, comprising:
a tag search instruction receiving unit that receives a tag search instruction from the host apparatus, the tag search instruction including at least one of a data read instruction and a data write instruction on the RFID tag;
a tag identification information requesting unit that transmits to the RFID tag a request for transmission of tag identification information uniquely identifying the RFID tag when the tag search instruction receiving unit receives the tag search instruction; and
a data processing requesting unit that transmits at least one of a data read request and a data write request to the RFID taq identified by the tag identification information based on the at least one of the read instruction and the write instruction when receiving the tag identification information transmitted from the RFID tag in response to the request for transmission transmitted from the tag identification information requesting unit.

2. The reader/writer apparatus according to claim 1, wherein
the tag search instruction includes at least one of a read size of data to be read and a write size of data to be written, and
when the at least one of the read size and the write size included in the tag search instruction exceeds a maximum size of data that allows the at least one of the read request and the write request to include as a request, the data processing requesting unit determines a size equal to or smaller than the maximum size to be a size of data requested by the at least one of the read request and the write request, and transmits to the RFID tag at least one of a read request and a write request for a plurality of pieces of data divided by the determined size.

3. The reader/writer apparatus according to claim 1 or 2, wherein
the tag search instruction includes a plurality of pieces of address information indicating a memory area of the RFID tag, the memory area being for the at least one of the data to be read and the data to be written, and
the data processing requesting unit transmits the at least one of the read request and the write request for each piece of address information included in the tag search instruction.

4. A computer-readable recording medium that stores therein a computer program for controlling a reader/writer apparatus for reading/writing data from/to an RFID tag according to an instruction from a host apparatus
the computer program causing a computer to execute:
receiving a tag search instruction from the host apparatus, the tag search instruction including at least one of a data read instruction and a data write instruction on the RFID tag;
transmitting to the RFID tag a request for transmission of tag identification information uniquely identifying the RFID tag when the tag search instruction is received; and
transmitting at least one of a data read request and a data write request to the RFID tag identified by the tag identification information based on the at least one of the read instruction and the write instruction upon reception of the tag identification information transmitted from the RFID tag in response to the request for transmission.

5. data access system comprising:
a reader/writer apparatus that reads/writes data from/to an RFID tag storing therein given data; and
a host apparatus that transmits at least one of a data read instruction and a data write instruction on the RFID tag to the reader/writer apparatus, wherein
the host apparatus comprises
a tag search instruction generating unit that generates a tag search instruction including the at least one of the read instruction and the write instruction; and
a tag search instruction transmitting unit that transmits the tag search instruction generated by the tag search instruction generating unit to the reader/writer apparatus, and
the reader/writer apparatus comprises
a tag search instruction receiving unit that receives the tag search instruction from the host apparatus;
a tag identification information requesting unit that transmits to the RFID tag a request for transmission of tag identification information uniquely identifying the RFID tag when the tag search instruction receiving unit receives the tag search instruction; and
a data processing requesting unit that transmits at least one of a data read request and a data write request to the RFID tag identified by the tag identification information based on the at least one of the read instruction and the write instruction when receiving the tag identification information transmitted from the RFID tag in response to the request for transmission transmitted from the tag identification information requesting unit.

6. A data access control method for controlling a reader/writer apparatus for reading/writing data from/to an RFID tag according to an instruction from a host apparatus, the control method comprising:
generating in the host apparatus a tag search instruction including at least one of a read instruction and a write instruction;
transmitting from the host apparatus the generated tag search instruction to the reader/writer apparatus;
transmitting from the reader/writer apparatus to the RFID tag a request for transmission of tag identification information uniquely identifying the RFID tag when the reader/writer apparatus receives the tag search instruction from the host apparatus; and
transmitting at least one of a data read request and a data write request from the reader/writer apparatus to the RFID tag identified by the tag identification information based on the at least one of the read instruction and the write instruction when the reader/writer apparatus receives the tag identification information transmitted from the RFID tag in response to the transmitted request for transmission.
